(19) Europäisches Patentamt
European Patent Office
Office européen des brevets

(11) EP 3 875 866 B1

(12) # EUROPEAN PATENT SPECIFICATION

(45) Date of publication and mention of the grant of the patent:
**10.01.2024 Bulletin 2024/02**

(21) Application number: **18942943.4**

(22) Date of filing: **11.12.2018**

(51) International Patent Classification (IPC):
***F24F 11/79*** *(2018.01)* ***F24F 110/30*** *(2018.01)*
***F24F 120/10*** *(2018.01)*

(52) Cooperative Patent Classification (CPC):
**F24F 11/79;** F24F 2110/30; F24F 2120/10;
Y02B 30/70

(86) International application number:
**PCT/JP2018/045494**

(87) International publication number:
**WO 2020/121405 (18.06.2020 Gazette 2020/25)**

(54) **AIR CONDITIONER AND CONTROL METHOD**

KLIMAANLAGE UND STEUERUNGSVERFAHREN

CLIMATISEUR ET PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.09.2021 Bulletin 2021/36**

(73) Proprietor: **Mitsubishi Electric Corporation**
**Tokyo 100-8310 (JP)**

(72) Inventors:
- **KOTAKE, Nobuki**
  **Tokyo 1008310 (JP)**
- **SUZUKI, Masataka**
  **Tokyo 1008310 (JP)**
- **YANAGISAWA, Takayuki**
  **Tokyo 1008310 (JP)**
- **SHIGA, Akira**
  **Tokyo 1008310 (JP)**
- **YOSHIKI, Wataru**
  **Tokyo 1008310 (JP)**
- **HAMADA, Mamoru**
  **Tokyo 1008310 (JP)**
- **SAKAI, Yu**
  **Tokyo 1008310 (JP)**

(74) Representative: **Pfenning, Meinig & Partner mbB**
**Patent- und Rechtsanwälte**
**Joachimsthaler Straße 10-12**
**10719 Berlin (DE)**

(56) References cited:
**WO-A1-2017/149657**
**CN-A- 105 890 740**
**JP-A- H11 133 049**
**JP-A- 2012 032 038**
**JP-A- 2012 063 055**
**JP-A- 2012 063 077**
**JP-A- 2012 072 965**
**JP-A- 2017 180 941**
**US-A- 5 156 203**
**US-A1- 2016 363 340**
**US-A1- 2017 097 169**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

The present invention relates to an air conditioning device and a control method.

### BACKGROUND ART

Various devices for air conditioning have been developed conventionally. More specifically, an air-conditioner, a fan, a blower, an air duct device, and the like have been developed. Hereinafter, these devices are generally referred to as the "air conditioning device".

A technique has conventionally been developed in which a wind speed in a space that is to be an air conditioning target of an air-conditioner is measured and the measured wind speed is used to control a blowing air volume by the air-conditioner (see, for example, Patent Literature 1). Patent Literature 2 discloses an air conditioning system comprising a wind speed sensor, a wind speed and direction sensing unit configured to calculate a wind direction value and blowing control unit configured to control a blowing direction on the basis of the wind direction value.

### CITATION LIST

### PATENT LITERATURE

Patent Literature 1: JP 2017-180940 A
Patent Literature 2: US 5 156 203 A

### SUMMARY OF INVENTION

### TECHNICAL PROBLEM

From a viewpoint of improving user comfort in the space described above, it is of course important to control a blowing air volume by an air-conditioner, and it is also important to control a blowing direction by the air-conditioner. In the conventional technique described in Patent Literature 1, a wind direction in the space is not included as a measurement target, and the blowing direction by the air-conditioner is not included as a control target. For this reason, there has been a problem that the user comfort in the space cannot be sufficiently improved.

Furthermore, the conventional technique described in Patent Literature 1 uses a sensor unit for measurement of the wind speed in the space. The sensor unit is provided in a remote controller for the air-conditioner. For this reason, when a position of a user in the space and a position of the remote controller in the space are separated from each other (that is, when the user does not hold the remote controller), the wind speed at the position of the remote controller is measured, and the blowing air volume is controlled on the basis of the measured wind speed. In this case, there is a problem that the wind speed at the position of the user may not become a suitable wind speed. As a result, there has been a problem that the user comfort in the space cannot be sufficiently improved.

The present invention has been made to solve the problems as described above, and an object of the present invention is to provide an air conditioning device and a control method capable of improving user comfort.

### SOLUTION TO PROBLEM

This problem is solved by an air conditioning device according to claim 1 and by a control method for an air conditioning device according to claim 15. In particular, an air conditioning device of the present invention includes: a wind measurement processing unit configured to calculate a wind direction value indicating a wind direction using a value measured by a lidar; and a blowing control unit configured to execute control of a blowing direction using the wind direction value calculated by the wind measurement processing unit.

### ADVANTAGEOUS EFFECTS OF INVENTION

According to the present invention, since the blowing direction is controlled using the wind direction measured by the lidar for measuring the wind, appropriate blowing control is possible, and the user comfort can be improved.

### BRIEF DESCRIPTION OF DRAWINGS

FIG. 1 is a block diagram illustrating a main part of an air conditioning device according to a first embodiment of the invention.

FIG. 2 is a block diagram illustrating a main part of an indoor unit of the air conditioning device according to the first embodiment.

FIG. 3 is an explanatory diagram illustrating an example of one measurement target area.

FIG. 4 is an explanatory diagram illustrating an example of a state in which one measurement target area moves in an air conditioning target space by scanning of a laser beam

FIG. 5 is an explanatory diagram illustrating an example of a portion of a first calibration value table corresponding to a predetermined Z coordinate value.

FIG. 6A is an explanatory diagram illustrating a hardware configuration of a control device in the air conditioning device according to the first embodiment.

FIG. 6B is an explanatory diagram illustrating another hardware configuration of the control device in the air conditioning device according to the first embodiment.

FIG. 7A is a flowchart illustrating the operation of the control device in the air conditioning device according to the first embodiment.

FIG. 7B is a flowchart illustrating an operation of the control device in the air conditioning device according to the first embodiment.

FIG. 8 is a flowchart illustrating a detailed operation of the control device in the air conditioning device according to the first embodiment.

FIG. 9 is a flowchart illustrating another detailed operation of the control device in the air conditioning device according to the first embodiment.

FIG. 10 is an explanatory diagram illustrating an example of a plurality of measurement target areas.

FIG. 11 is a block diagram illustrating a main part of an air conditioning device according to a second embodiment of the invention.

FIG. 12 is a block diagram illustrating a main part of an indoor unit of the air conditioning device according to the second embodiment.

FIG. 13A is a flowchart illustrating the operation of a control device in the air conditioning device according to the second embodiment.

FIG. 13B is a flowchart illustrating an operation of the control device in the air conditioning device according to the second embodiment.

FIG. 13C is a flowchart illustrating another operation of the control device in the air conditioning device according to the second embodiment.

FIG. 14 is a block diagram illustrating a main part of another indoor unit of the air conditioning device according to the second embodiment.

FIG. 15 is a block diagram illustrating the main part of the other indoor unit of the air conditioning device according to the second embodiment.

FIG. 16 is a block diagram illustrating a main part of an air conditioning device according to a third embodiment of the invention.

FIG. 17 is a block diagram illustrating a main part of an indoor unit of the air conditioning device according to the third embodiment.

FIG. 18A is a flowchart illustrating the operation of a control device in the air conditioning device according to the third embodiment.

FIG. 18B is a flowchart illustrating an operation of the control device in the air conditioning device according to the third embodiment.

## DESCRIPTION OF EMBODIMENTS

Hereinafter, to explain the present invention in more detail, embodiments for carrying out the present invention will be described with reference to the accompanying drawings.

First Embodiment of the invention.

FIG. 1 is a block diagram illustrating a main part of an air conditioning device according to a first embodiment. FIG. 2 is a block diagram illustrating a main part of an indoor unit of the air conditioning device according to the first embodiment. An air conditioning device 200 of the first embodiment will be described with reference to FIGS. 1 and 2.

As illustrated in FIG. 1, the air conditioning device 200 includes an air-conditioner. That is, the air conditioning device 200 includes an indoor unit 1 and an outdoor unit 2. The indoor unit 1 includes a heat exchanger (not illustrated), and the outdoor unit 2 includes another heat exchanger (not illustrated), and these heat exchangers are thermally connected to each other via a refrigerant pipe (not illustrated). The outdoor unit 2 includes a compressor (not illustrated) for refrigerant, and the like. Since structures, arrangements, operations, and the like of these members are known, detailed description thereof will be omitted. The air conditioning device 200 is operated with a remote controller 3.

Hereinafter, the left-right direction with respect to the indoor unit 1 is referred to as the "X direction". The front-back direction with respect to the indoor unit 1 is referred to as the "Y direction". The up-down direction with respect to the indoor unit 1 is referred to as the "Z direction". The azimuth direction with respect to the indoor unit 1, that is, the azimuth direction with respect to a virtual axis (hereinafter referred to as the "Y axis") along the Y direction is simply referred to as the "azimuth direction". The elevation or depression angle direction with respect to the indoor unit 1, that is, the elevation or depression angle direction with respect to the Y axis is simply referred to as the "elevation or depression angle direction".

A space S that is to be an air conditioning target of the air conditioning device 200 is referred to as the "air conditioning target space". One or more areas A1 that are to be measurement targets for wind directions $\Phi$ and $\Theta$ and a wind speed V in the air conditioning target space S are referred to as the "measurement target areas". Usually, each measurement target area A1 is set to a small area in which it can be assumed that the wind directions $\Phi$ and $\Theta$ and wind speed V in the area are constant.

The wind direction $\Phi$ with respect to the azimuth direction in the air conditioning target space S may be referred to as the "first wind direction". The wind direction $\Theta$ with respect to the elevation or depression angle direction in the air conditioning target space S may be referred to as the "second wind direction". The blowing direction $\Phi'$ by the indoor unit 1 with respect to the azimuth direction may be referred to as the "first blowing direction". The blowing direction $\Theta'$ by the indoor unit 1 with respect to the elevation or depression angle direction may be referred to as the "second blowing direction".

As illustrated in FIG. 2, the indoor unit 1 includes a wind measurement lidar 11. The wind measurement lidar 11 includes, for example, a pulse modulation type lidar, a continuous wave (CW) type lidar, or a lidar of a type using intensity correlation. Since the configuration and operation principle of the lidar of each type are known, detailed description thereof will be omitted.

An emission port O for a laser beam of the wind measurement lidar 11 is provided, for example, on the front surface portion of the indoor unit 1. In the wind measurement lidar 11, an emission direction D, that is, a line-of-sight direction, of the laser beam is variable. The wind measurement lidar 11 emits the laser beam to the air conditioning target space S, thereby measuring a wind speed (hereinafter, referred to as the "line-of-sight direction wind speed") Vr with respect to the line-of-sight direction, at a point (hereinafter referred to as the "measurement target point") P at any distance with respect to the emission direction D. Since the method of measuring the line-of-sight direction wind speed Vr by the wind measurement lidar 11 is known, detailed description thereof will be omitted.

An output signal of the wind measurement lidar 11 includes angle values $\varphi$ and $\theta$ corresponding to the emission direction D. That is, $\varphi$ is an angle value with respect to the azimuth direction, and $\theta$ is an angle value with respect to the elevation or depression angle direction. Furthermore, the output signal of the wind measurement lidar 11 includes a value of the line-of-sight direction wind speed Vr at the measurement target point P.

A first wind direction measurement processing unit 21 calculates a measured value $\Phi_L$ of the first wind direction $\Phi$ in the measurement target area A1 by using the output signal of the wind measurement lidar 11. A second wind direction measurement processing unit 31 calculates a measured value $\Theta_L$ of the second wind direction $\Theta$ in the measurement target area A1 by using the output signal of the wind measurement lidar 11. A wind speed measurement processing unit 41 calculates a measured value $V_L$ of the wind speed V in the measurement target area A1 by using the output signal of the wind measurement lidar 11.

Hereinafter, the measured value $\Phi_L$ may be referred to as the "first measured wind direction value". The measured value $\Theta_L$ may be referred to as the "second measured wind direction value". The first measured wind direction value $\Phi_L$ and the second measured wind direction value $\Theta_L$ may be collectively referred to as the "measured wind direction values". The measured value $V_L$ may be referred to as the "measured wind speed value".

The first wind direction measurement processing unit 21, the second wind direction measurement processing unit 31, and the wind speed measurement processing unit 41 constitute a main part of a wind measurement processing unit 51. That is, the wind measurement processing unit 51 calculates the measured wind direction values $\Phi_L$ and $\Theta_L$ and the measured wind speed value $V_L$ by using the output signal of the wind measurement lidar 11. Hereinafter, pieces of processing in which the wind measurement processing unit 51 calculates the measured wind direction values $\Phi_L$ and $\Theta_L$ and the measured wind speed value $V_L$ are collectively referred to as the "wind measurement processing".

Here, a specific example of the wind measurement processing will be described with reference to FIG. 3.

The line-of-sight direction wind speed Vr at the measurement target point P is expressed by the following expression (1) using the angle values $\varphi$ and $\theta$ corresponding to the emission direction D. Vu in the expression (1) is a wind speed value in the X direction at the measurement target point P. Vv in the expression (1) is a wind speed value in the Y direction at the measurement target point P. Vw in the expression (1) is a wind speed value in the Z direction at the measurement target point P.

$$\begin{aligned} Vr = {} & Vu \times \sin\varphi \times \cos\theta \\ & + Vv \times \cos\varphi \times \cos\theta \\ & + Vw \times \sin\theta \qquad (1) \end{aligned}$$

The wind measurement lidar 11 emits the laser beam in N directions Di to $D_N$, thereby measuring the line-of-sight direction wind speed Vr at each of N measurement target points Pi to $P_N$ in the inside (more specifically, an edge portion) of the measurement target area A1. Here, N is an integer greater than or equal to 3, and N = 3 in the example illustrated in FIG. 3. As a result, the output signal is obtained including N angle values $\varphi_1$ to $\varphi_N$, N angle values $\theta_1$ to $\theta_N$, and N line-of-sight direction wind speeds Vn to Vrrr. That is, the N emission directions Di to $D_N$, the N measurement target points Pi to $P_N$, the N angle values $\varphi_1$ to $\varphi_N$, the N angle values $\theta_1$ to $\theta_N$, and the N line-of-sight direction wind speeds $Vr_1$ to $Vr_N$ have a one-to-one correspondence with each other.

Note that, the difference value between each two angle values $\varphi$ among the N angle values $\varphi_1$ to $\varphi_N$ is set to a predetermined value (for example, 2 degrees). Furthermore, the difference value between each two angle values $\theta$ among the N angle values $\theta_1$ to $\varphi_N$ is set to a predetermined value (for example, 2 degrees).

These values $\varphi_1$ to $\varphi_N$, $\theta_1$ to $\theta_N$, and $Vr_1$ to $Vr_N$ are substituted to the expression (1), whereby simultaneous equations with three unknowns including the three variables Vu, Vv, and Vw are obtained. The wind measurement processing unit 51 calculates the wind speed values Vu, Vv, and Vw by solving the simultaneous equations with three unknowns.

The first wind direction measurement processing unit 21 calculates the first measured wind direction value $\Phi_L$ by the following expression (2) by using the calculated wind speed values Vu, Vv, and Vw. The second wind direction measurement processing unit 31 calculates the second measured wind direction value $\Theta_L$ by the following expression (3) by using the calculated wind speed values Vu, Vv, and Vw. The wind speed measurement processing unit 41 calculates the measured wind speed value $V_L$ by the following expression (4) by using the calculated wind speed values Vu, Vv, and Vw.

$$\Phi_L = \mathrm{atan}(Vu/Vv) \quad (2)$$

$$\Theta_L = \mathrm{atan}\{Vw/\sqrt{(Vu^2 + Vv^2)}\} \quad (3)$$

$$V_L = \sqrt{(Vu^2 + Vv^2 + Vw^2)} \quad (4)$$

That is, the wind measurement processing unit 51 calculates the measured wind direction values $\Phi_L$ and $\Theta_L$ and the measured wind speed value $V_L$ on the assumption that the wind directions Φ and Θ and the wind speed V in the measurement target area A1 are constant.

As illustrated in FIG. 4, the wind measurement lidar 11 performs scanning of the laser beam, whereby the measurement target area A1 moves in the air conditioning target space S. The wind measurement processing unit 51 calculates the measured values $\Phi_L$, $\Theta_L$, and $V_L$ multiple times during the scanning, whereby measurement of the wind directions Φ and Θ and the wind speed V can be implemented over a wide range in the air conditioning target space S. More specifically, the measurement of the wind directions Φ and Θ and the wind speed V can be implemented in substantially the entire air conditioning target space S.

The indoor unit 1 includes a wind direction plate (hereinafter, may be referred to as the "first wind direction plate") 24 whose mounting angle with respect to the azimuth direction is variable. The indoor unit 1 includes a drive motor 23 for the first wind direction plate 24. A first blowing direction control unit 22 controls the first blowing direction Φ' by controlling a rotation position of a rotor in the drive motor 23, that is, by controlling the mounting angle of the first wind direction plate 24.

The indoor unit 1 includes a wind direction plate (hereinafter, may be referred to as the "second wind direction plate") 34 whose mounting angle with respect to the elevation or depression angle direction is variable. The indoor unit 1 includes a drive motor 33 for the second wind direction plate 34. A second blowing direction control unit 32 controls the second blowing direction Θ' by controlling a rotation position of a rotor in the drive motor 33, that is, by controlling the mounting angle of the second wind direction plate 34.

The indoor unit 1 includes a blowing fan 44. The indoor unit 1 includes a drive motor 43 for the blowing fan 44. A blowing air volume control unit 42 controls a blowing air volume V' by the indoor unit 1 by controlling a rotation speed of a rotor in the drive motor 43, that is, by controlling a rotation speed of the blowing fan 44.

The first blowing direction control unit 22, the second blowing direction control unit 32, and the blowing air volume control unit 42 constitute a main part of a blowing control unit 52. That is, the blowing control unit 52 controls the blowing directions Φ' and Θ' and the blowing air volume V' by the indoor unit 1.

Here, the first blowing direction control unit 22 has a function of calibrating the first blowing direction Φ' by using the first measured wind direction value $\Phi_L$ calculated by the first wind direction measurement processing unit 21. The second blowing direction control unit 32 has a function of calibrating the second air direction Θ' by using the second measured wind direction value $\Theta_L$ calculated by the second wind direction measurement processing unit 31. The blowing air volume control unit 42 has a function of calibrating the blowing air volume V' by using the measured wind speed value $V_L$ calculated by the wind speed measurement processing unit 41. Hereinafter, controls in which the blowing control unit 52 calibrates the blowing directions Φ' and Θ' and the blowing air volume V' using the measured values $\Phi_L$, $\Theta_L$, and $V_L$ are collectively referred to as the "calibration control". Hereinafter, a specific example of the calibration control will be described.

First, the first blowing direction control unit 22 sets the first blowing direction Φ' to an initial value (for example, a predetermined value). The second blowing direction control unit 32 sets the second blowing direction Θ' to an initial value (for example, a predetermined value). The blowing air volume control unit 42 sets the blowing air volume V' to an initial value (for example, a predetermined value). Hereinafter, each of the set values may be referred to as the "set value".

Here, in the blowing control unit 52, a plurality of three-dimensional tables (hereinafter referred to as the "wind direction and wind speed table") is stored in advance indicating a correspondence between the values of Φ', Θ', and V' with respect to the indoor unit 1 and the values of Φ, Θ, and V in each of a plurality of areas (hereinafter referred to as the "unit area") A2 obtained by dividing the air conditioning target space S in the X direction, the Y direction, and the Z direction. The blowing control unit 52 selects a wind direction and wind speed table corresponding to the set values of Φ', Θ', and V' from among the plurality of wind direction and wind speed tables stored in advance.

When the first measured wind direction value $\Phi_L$ is calculated by the first wind direction measurement processing unit 21, the first blowing direction control unit 22 sets a target value $\Phi_A$ of the first wind direction Φ in the measurement target area A1 by using the selected wind direction and wind speed table. That is, the target value $\Phi_A$ is set depending on the value of Φ in the unit area A2 corresponding to the measurement target area A1 among the values of Φ included in the selected wind direction and wind speed table. Hereinafter, the target value $\Phi_A$ may be referred to as the "first target wind direction value".

The first blowing direction control unit 22 calculates a difference value $\Phi_E$ between the first target wind direction value $\Phi_A$ and the first measured wind direction value $\Phi_L$. The first blowing direction control unit 22 compares the absolute value of the difference value $\Phi_E$ with a predetermined threshold value Φth. When the absolute value of the difference value $\Phi_E$ is larger than the threshold value Φth, the first blowing direction control unit 22 calculates a calibration value $\Phi_C$ depending on the difference value $\Phi_E$. The first blowing direction control unit 22 corrects the first blowing direction Φ' on the basis of the calculated calibration value $\Phi_C$. As a result, the first blowing direction Φ' is calibrated.

When the second measured wind direction value $\Theta_L$ is calculated by the second wind direction measurement processing unit 31, the second blowing direction control unit 32 sets a target value $\Theta_A$ of the second wind direction Θ in the measurement target area A1 by using the selected wind direction and wind speed table. That is, the target value $\Theta_A$ is set depending on the value of Θ in the unit area A2 corresponding to the measurement target area A1 among the values of Θ included in the selected wind direction and wind speed table. Hereinafter, the target value $\Theta_A$ may be referred to as the "second target wind direction value". The first target wind direction value $\Phi_A$ and the second target wind direction value $\Theta_A$ may be collectively referred to as the "target wind direction values".

The second blowing direction control unit 32 calculates a difference value $\Theta_E$ between the second target wind direction value $\Theta_A$ and the second measured wind direction value $\Theta_L$. The second blowing direction control unit 32 compares the absolute value of the difference value $\Theta_E$ with a predetermined threshold value Oth. When the absolute value of the difference value $\Theta_E$ is larger than the threshold value Oth, the second blowing direction control unit 32 calculates a calibration value Oc depending on the difference value $\Theta_E$. The second blowing direction control unit 32 corrects the second blowing direction Θ' on the basis of the calculated calibration value Oc. As a result, the second blowing direction Θ' is calibrated.

When the measured wind speed value $V_L$ is calculated by the wind speed measurement processing unit 41, the blowing air volume control unit 42 sets a target value $V_A$ of the wind speed V in the measurement target area A1 by using the selected wind direction and wind speed table. That is, the target value $V_A$ is set depending on the value of V in the unit area A2 corresponding to the measurement target area A1 among the values of V included in the selected wind direction and wind speed table. Hereinafter, the target value $V_A$ may be referred to as the "target wind speed value".

The blowing air volume control unit 42 calculates a difference value $V_E$ between the target wind speed value $V_A$ and the measured wind speed value $V_L$. The blowing air volume control unit 42 compares the absolute value of the difference value $V_E$ with a predetermined threshold value Vth. When the absolute value of the difference value $V_E$ is larger than the threshold value Vth, the blowing air volume control unit 42 calculates a calibration value Vc depending on the difference value $V_E$. The blowing air volume control unit 42 corrects the blowing air volume V' on the basis of the calculated calibration value Vc. As a result, the blowing air volume V' is calibrated.

Note that, the wind measurement lidar 11 can measure the line-of-sight direction wind speed Vr continuously in time (so-called in "real time"). Thus, the first wind direction measurement processing unit 21 can calculate the first measured wind direction value $\Phi_L$ continuously in time. The second wind direction measurement processing unit 31 can calculate the second measured wind direction value $\Theta_L$ continuously in time. The wind speed measurement processing unit 41 can calculate the measured wind speed value $V_L$ continuously in time.

Thus, the first blowing direction control unit 22 may repeatedly execute correction of the first blowing direction Φ' so that the absolute value of the difference value $\Phi_E$ is gradually reduced, by using the continuously calculated first measured wind direction value $\Phi_L$. The second blowing direction control unit 32 may repeatedly execute correction of the second blowing direction Θ' so that the absolute value of the difference value $\Theta_E$ is gradually reduced, by using the continuously calculated second measured wind direction value $\Theta_L$. The blowing air volume control unit 42 may repeatedly execute correction of the blowing air volume V' so that the absolute value of the difference value $V_E$ is gradually reduced, by using the continuously calculated measured wind speed value $V_L$. That is, the calibration control may be performed by so-called "feedback control".

Furthermore, the first blowing direction control unit 22 may manage the calibration value $\Phi_C$ calculated in the calibration control by using a dedicated three-dimensional table (hereinafter referred to as the "first calibration value table"). That is, the first calibration value table indicates the calibration value $\Phi_C$ in each of the plurality of unit areas A2. FIG. 5 illustrates an example of a portion of the first calibration value table corresponding to a predetermined Z coordinate value. In the example illustrated in FIG. 5, the calibration value $\Phi_C$ in each of the 99 unit areas A2 corresponding to the predetermined Z coordinate value is set to a value within a range of -5 degrees to +5 degrees.

Furthermore, the second blowing direction control unit 32 may manage the calibration value Oc calculated in the calibration control by using a dedicated three-dimensional table (hereinafter referred to as the "second calibration value table"). That is, the second calibration value table indicates the calibration value Oc in each of the plurality of unit areas A2. Since a specific example of the second calibration value table is similar to the specific example of the first calibration value table illustrated in FIG. 5, illustration and description will be omitted.

Furthermore, the blowing air volume control unit 42 may manage the calibration value Vc calculated in the calibration control by using a dedicated three-dimensional table (hereinafter referred to as the "third calibration value table"). That is, the third calibration value table indicates the calibration value Vc in each of the plurality of unit areas A2. Since a specific example of the third calibration value table is similar to the specific example of the first calibration value table illustrated in FIG. 5, illustration and description will be omitted. Hereinafter, the first calibration value table, the second calibration value table, and the third calibration value table may be collectively referred to as the "calibration value table".

The wind measurement processing unit 51 and the blowing control unit 52 constitute a main part of a control device 100. The wind measurement lidar 11, the drive motor 23, the first wind direction plate 24, the drive motor 33, the second wind direction plate 34, the drive motor 43, the blowing fan 44, and the control device 100 constitute a main part of the indoor unit 1. The indoor unit 1 and the outdoor unit 2 constitute a main part of the air conditioning device 200.

Next, a hardware configuration of the main part of the control device 100 will be described with reference to FIG. 6.

As illustrated in FIG. 6A, the control device 100 includes a processor 61 and a memory 62. A nonvolatile memory of the memory 62 stores a program corresponding to functions of the wind measurement processing unit 51 and the blowing control unit 52. The processor 61 loads the stored program into a volatile memory of the memory 62 and executes the loaded program. As a result, the functions of the wind measurement processing unit 51 and the blowing control unit 52 are implemented.

Alternatively, as illustrated in FIG. 6B, the control device 100 includes a processing circuit 63. In this case, the functions of the wind measurement processing unit 51 and the blowing control unit 52 are implemented by the dedicated processing circuit 63.

Alternatively, the control device 100 includes the processor 61, the memory 62, and the processing circuit 63 (not illustrated). In this case, some of the functions of the wind measurement processing unit 51 and the blowing control unit 52 are implemented by the processor 61 and the memory 62, and the remaining functions are implemented by the dedicated processing circuit 63.

The processor 61 includes, for example, at least one of a central processing unit (CPU), a graphics processing unit (GPU), a microprocessor, a microcontroller, or a digital signal processor (DSP).

The volatile memory of the memory 62 includes, for example, a random access memory (RAM). The nonvolatile memory of the memory 62 includes, for example, at least one of a read only memory (ROM), a flash memory, an erasable programmable read only memory (EPROM), an electrically erasable programmable read only memory (EEPROM), a solid state drive (SSD), or a hard disk drive (HDD).

The processing circuit 63 is formed by using, for example, an application specific integrated circuit (ASIC), a programmable logic device (PLD), a field-programmable gate array (FPGA), a system-on-a-chip (SoC), a system large-scale integration (LSI), or the like.

Next, the operation of the control device 100 will be described with reference to a flowchart of FIG. 7. The blowing control unit 52 starts processing of step ST1 when, for example, an operation for instructing the start of air conditioning (cooling, heating, or the like) is input to the remote controller 3.

First, in step ST1, the blowing control unit 52 executes initial setting of the blowing directions Φ' and Θ' and the blowing air volume V'. That is, the first blowing direction control unit 22 sets the first blowing direction Φ' to the initial value. The second blowing direction control unit 32 sets the second blowing direction Θ' to the initial value. The blowing air volume control unit 42 sets the blowing air volume V' to the initial value.

Next, in step ST2, the blowing control unit 52 executes control to start blowing by the indoor unit 1. That is, the first blowing direction control unit 22 controls the rotation position of the rotor in the drive motor 23 so that the mounting angle of the first wind direction plate 24 becomes an angle corresponding to the set value of the first blowing direction Φ' in step ST1. The second blowing direction control unit 32 controls the rotation position of the rotor in the drive motor 33 so that the mounting angle of the second wind direction plate 34 becomes an angle corresponding to the set value of the second blowing direction Θ' in step ST1. The blowing air volume control unit 42 causes rotation of the drive motor 43 (that is, rotation of the blowing fan 44) to be started at a rotation speed corresponding to the set value of the blowing air volume V' in step ST1.

When an operation for instructing the end of the air conditioning is input to the remote controller 3, for example, the blowing control unit 52 executes control to end the blowing by the indoor unit 1. That is, the blowing air volume control unit 42 causes the rotation of the drive motor 43 (that is, the rotation of the blowing fan 44) to be stopped.

Here, while the blowing by the indoor unit 1 is executed, the wind measurement lidar 11 repeatedly executes processing of measuring the line-of-sight direction wind speed Vr (more specifically, N line-of-sight direction wind speeds Vn to $Vr_N$) while performing scanning of the laser beam (that is, while moving the measurement target area A1) (see FIG. 4). Furthermore, the wind measurement lidar 11 repeatedly executes processing of outputting the signal including the angle values φ (more specifically, the N angle values $\varphi_1$ to $\varphi_N$,), the angle values θ (more specifically, the N angle values $\theta_1$ to $\theta_N$), and the values of the line-of-sight direction wind speeds Vr (more specifically, the N line-of-sight direction wind speeds $Vr_1$ to $Vr_N$). As a result, the wind measurement processing by the wind measurement processing unit 51 (step ST3) and the calibration control by the blowing control unit 52 (step ST4) are repeatedly executed.

Next, details of the processing of steps ST3 and ST4 of each time will be described with reference to a flowchart of FIG. 8. That is, processing of steps ST11, ST21, and ST31 in FIG. 8 is included in the processing of step ST3 (that is, the wind measurement processing) of each time. Furthermore, processing of steps ST12 to ST15, ST22 to ST25, and ST32 to ST35 in FIG. 8 is included in the processing of step ST4 (that is, calibration control) of each time.

First, the first wind direction measurement processing unit 21 calculates the first measured wind direction value $\Phi_L$ in the measurement target area A1 by using the output signal of the wind measurement lidar 11 (step ST11). Next, the first blowing direction control unit 22 calculates the difference value $\Phi_E$ between the first target wind direction value $\Phi_A$ and the first measured wind direction value $\Phi_L$ calculated in step ST11 (step ST12). The first target wind direction value $\Phi_A$ is set using the wind direction and wind speed table corresponding to the set values of Φ', Θ', and V' in step ST1. More specifically, the first target wind direction value $\Phi_A$ is set depending on the value of Φ in the unit area A2 corresponding to the measurement target area A1 among the values of Φ included in the wind direction and wind speed table.

Next, the first blowing direction control unit 22 compares the absolute value of the difference value $\Phi_E$ calculated in step ST12 with the threshold value Φth (step ST13). When the absolute value of the difference value $\Phi_E$ is larger than the threshold value Φth (step ST13 "NO"), the first blowing direction control unit 22 calculates the calibration value $\Phi_C$ depending on the difference value $\Phi_E$ (step ST14). Next, the first blowing direction control unit 22 corrects the first blowing direction Φ' on the basis of the calibration value $\Phi_C$ calculated in step ST14 (step ST15). That is, the first blowing direction control unit 22 corrects the mounting angle of the first wind direction plate 24 by correcting the rotation position of the rotor in the drive motor 23.

The second wind direction measurement processing unit 31 calculates the second measured wind direction value $\Theta_L$ in the measurement target area A1 by using the output signal of the wind measurement lidar 11 (step ST21). Next, the second blowing direction control unit 32 calculates the difference value $\Theta_E$ between the second target wind direction value $\Theta_A$ and the second measured wind direction value $\Theta_L$ calculated in step ST21 (step ST22). The second target wind direction value $\Theta_A$ is set using the wind direction and wind speed table corresponding to the set values of Φ', Θ', and V' in step ST1. More specifically, the second target wind direction value $\Theta_A$ is set depending on the value of Θ in the unit area A2 corresponding to the measurement target area A1 among the values of Θ included in the wind direction and wind speed table.

Next, the second blowing direction control unit 32 compares the absolute value of the difference value $\Theta_E$ calculated in step ST22 with the threshold value Oth (step ST23). When the absolute value of the difference value $\Theta_E$ is larger than the threshold value Oth (step ST23 "NO"), the second blowing direction control unit 32 calculates the calibration value Oc depending on the difference value $\Theta_E$ (step ST24). Next, the second blowing direction control unit 32 corrects the second blowing direction Θ' on the basis of the calibration value Oc calculated in step ST24 (step ST25). That is, the second blowing direction control unit 32 corrects the mounting angle of the second wind direction plate 34 by correcting the rotation position of the rotor in the drive motor 33.

The wind speed measurement processing unit 41 calculates the measured wind speed value $V_L$ in the measurement target area A1 by using the output signal of the wind measurement lidar 11 (step ST31). Next, the blowing air volume control unit 42 calculates the difference value $V_E$ between the target wind speed value $V_A$ and the measured wind speed value $V_L$ calculated in step ST31 (step ST32). The target wind speed value $V_A$ is set using the wind direction and wind speed table corresponding to the set values of Φ', Θ', and V' in step ST1. More specifically, the target wind speed value $V_A$ is set depending on the value of V in the unit area A2 corresponding to the measurement target area A1 among the values of V included in the wind direction and wind speed table.

Next, the blowing air volume control unit 42 compares the absolute value of the difference value $V_E$ calculated in step ST32 with the threshold value Vth (step ST33). When the absolute value of the difference value $V_E$ is larger than the threshold value Vth (step ST33 "NO"), the blowing air volume control unit 42 calculates the calibration value Vc depending on the difference value $V_E$ (step ST34). Next, the blowing air volume control unit 42 corrects the blowing air volume V' on the basis of the calibration value Vc calculated in step ST34 (step ST35). That is, the blowing air volume control unit 42 corrects the rotation speed of the blowing fan 44 by correcting the rotation speed of the rotor in the drive motor 43.

Next, effects of the air conditioning device 200 will be described.

As described above, the control device 100 measures the wind directions Φ and Θ in the air conditioning target space S, and uses the measured wind direction values $\Phi_L$ and $\Theta_L$ for the control (more specifically, the calibration control) of the blowing directions Φ' and θ'.

Usually, the correspondence between the blowing directions Φ' and Θ' by the indoor unit 1 and the wind directions Φ and Θ at each point in the air conditioning target space S may change depending on an installation situation of furniture and the like in the air conditioning target space S. Furthermore, such a correspondence may change due to aging degradation of constituent members (for example, the drive motors 23 and 33, and the wind direction plates 24 and 34) of the indoor unit 1 and the like. If the blowing control unit 52 controls the blowing directions Φ' and Θ' on the basis of a predetermined table (for example, the wind direction and wind speed table) without executing the wind measurement processing and the calibration control, there has been a problem that it is not possible to cope with such a change.

As a result, there has been a problem that the difference values of the wind directions Φ and Θ with respect to the target wind direction values $\Phi_A$ and $\Theta_A$ are increased, and the user comfort in the air conditioning target space S is decreased.

On the other hand, the wind measurement processing unit 51 executes the wind measurement processing, and the blowing control unit 52 executes the calibration control, whereby it becomes possible to cope with such a change. That is, the difference values of the wind direction Φ and Θ with respect to the target wind direction values $\Phi_A$, $\Theta_A$ can be decreased regardless of the installation situation of the furniture and the like in the air conditioning target space S, and regardless of the aging degradation of the constituent members of the indoor unit 1 and the like. As a result, it is possible to suppress the decrease in user comfort in the air conditioning target space S. In other words, the user comfort in the air conditioning target space S can be improved.

Furthermore, the control device 100 measures the wind speed V in the air conditioning target space S, and uses the measured wind speed value $V_L$ for the control of the blowing air volume V' (more specifically, the calibration control). As a result, the user comfort in the air conditioning target space S can be improved similarly to the above.

Furthermore, in the control device 100, the wind measurement lidar 11 integrated with the indoor unit 1 is used for the measurement of the wind directions Φ and Θ and the wind speed V As a result, it is possible to eliminate the need for a dedicated measuring device that is a separate member from the indoor unit 1. Furthermore, the measurement of the wind directions Φ and Θ and the wind speed V can be implemented over a wide range in the air conditioning target space S.

Next, another specific example of the wind measurement processing and the calibration control will be described with reference to a flowchart of FIG. 9.

In the example illustrated in FIG. 8, the wind measurement processing is executed every time the wind measurement lidar 11 outputs the signal including the values of $\varphi_1$ to $\varphi_N$, $\theta_1$ to $\theta_N$, and Vri to Vrrr once during the scanning of the laser beam. As a result, one each of the measured values $\Phi_L$, $\Theta_L$, and $V_L$ is calculated in the wind measurement processing (step ST3) of each time.

On the other hand, in the example illustrated in FIG. 9, the wind measurement processing is executed every time the wind measurement lidar 11 outputs the signal including the values of $\varphi_1$ to $\varphi_N$, $\theta_1$ to $\theta_N$, and $Vr_1$ to Vrrr M times during the scanning of the laser beam. As a result, M each of the measured values $\Phi_L$, $\Theta_L$, and $V_L$ are calculated in the wind measurement processing (step ST3) of each time. Here, M is an integer greater than or equal to 2. That is, the M measured values $\Phi_L$, $\Theta_L$, and $V_L$ are different from each other in coordinate values of the corresponding measurement target areas A1.

That is, in step ST11a, the first wind direction measurement processing unit 21 calculates M first measured wind direction values $\Phi_{L1}$ to $\Phi_{LM}$.

Next, the first blowing direction control unit 22 calculates difference values $\Phi_{E1}$ to $\Phi_{EM}$ between first target wind direction values $\Phi_{A1}$ to $\Phi_{AM}$ and the first measured wind direction values $\Phi_{L1}$ to $\Phi_{LM}$, individually (step ST12a). Here, the M first target wind direction values $\Phi_{A1}$ to $\Phi_{AM}$ have a one-to-one correspondence with the M first measured wind direction values $\Phi_{L1}$ to $\Phi_{LM}$. The method of setting each of the M first target wind direction values $\Phi_{A1}$ to $\Phi_{AM}$ is as described above. Next, the first blowing direction control unit 22 calculates a root mean square (RMS) error $\Phi_{RMSE}$ based on the M difference values $\Phi_{E1}$ to $\Phi_{EM}$ (step ST12a).

Next, the first blowing direction control unit 22 compares the RMS error $\Phi_{RMSE}$ with the predetermined threshold value Φth (step ST13a). When the RMS error $\Phi_{RMSE}$ is larger than the threshold value Φth (step ST13a "NO"), the first blowing direction control unit 22 calculates the calibration value $\Phi_C$ depending on any one difference value $\Phi_E$ among the M difference values $\Phi_{E1}$ to $\Phi_{EM}$ (for example, the largest difference value $\Phi_E$ among the M difference values $\Phi_{E1}$ to $\Phi_{EM}$) (step ST14a). Next, the first blowing direction control unit 22 corrects the first blowing direction Φ' on the basis of the calculated calibration value $\Phi_C$ (step ST15).

In step ST21a, the second wind direction measurement processing unit 31 calculates M second measured wind direction values $\Theta_{L1}$ to $\Theta_{LM}$.

Next, the second blowing direction control unit 32 calculates difference values $\Theta_{E1}$ to $\Theta_{EM}$ between second target wind direction values $\Theta_{A1}$ to $\Theta_{AM}$ and the second measured wind direction values $\Theta_{L1}$ to $\Theta_{LM}$ (step ST22a). Here, the M second target wind direction values $\Theta_{A1}$ to $\Theta_{AM}$ have a one-to-one correspondence with the M second measured wind direction values $\Theta_{L1}$ to $\Theta_{LM}$. The method of setting each of the M second target wind direction values $\Theta_{A1}$ to $\Theta_{AM}$ is as described above. Next, the second blowing direction control unit 32 calculates an RMS error $\Theta_{RMSE}$ based on the M difference values $\Theta_{E1}$ to $\Theta_{EM}$ (step ST22a).

Next, the second blowing direction control unit 32 compares the RMS error $\Theta_{RMSE}$ with the predetermined threshold Oth (step ST23a). When the RMS error $\Theta_{RMSE}$ is larger than the threshold value Oth (step ST23a "NO"), the second blowing direction control unit 32 calculates the calibration value Oc depending on any one difference value $\Theta_E$ among the M difference values $\Theta_{E1}$ to $\Theta_{EM}$ (for example, the largest difference value $\Theta_E$ among the M difference values $\Theta_{E1}$ to $\Theta_{EM}$) (step ST24a). Next, the second blowing direction control unit 32 corrects the second blowing direction Θ' on the basis of the calculated calibration value $\Phi_C$ (step ST25).

In step ST31a, the wind speed measurement processing unit 41 calculates M measured wind speed values $V_{L1}$ to $V_{LM}$.

Next, the blowing air volume control unit 42 calculates difference values $V_{E1}$ to $V_{EM}$ between target wind speed values $V_{A1}$ to $V_{AM}$ and the measured wind speed values $V_{L1}$ to $V_{LM}$ (step ST32a). Here, the M target wind speed values $V_{A1}$ to $V_{AM}$ have a one-to-one correspondence with the M measured wind speed values $V_{L1}$ to $V_{LM}$. The method of setting each of the M target wind speed values $V_{A1}$ to $V_{AM}$ is as described above. Next, the blowing air volume control unit 42 calculates an RMS error $V_{RMSE}$ based on the M difference values $V_{E1}$ to $V_{EM}$ (step ST32a).

Next, the blowing air volume control unit 42 compares the RMS error $V_{RMSE}$ with the predetermined threshold value Vth (step ST33a). When the RMS error $V_{RMSE}$ is larger than the threshold value Vth (step ST33a "NO"), the blowing air volume control unit 42 calculates the calibration value Vc depending on any one difference value $V_E$ among the M difference values $V_{E1}$ to $V_{EM}$ (for example, the largest difference value $V_E$ among the M difference values $V_{E1}$ to $V_{EM}$) (step ST34a). Next, the blowing air volume control unit 42 corrects the blowing air volume V' on the basis of the calculated calibration value Vc (step ST35).

Note that, the first blowing direction control unit 22 may use an average value of the M difference values $\Phi_{E1}$ to $\Phi_{EM}$ instead of the RMS error $\Phi_{RMSE}$. The second blowing direction control unit 32 may use an average value of the M difference values $\Theta_{E1}$ to $\Theta_{EM}$ instead of the RMS error $\Theta_{RMSE}$. The blowing air volume control unit 42 may use an average value of the M difference values $V_{E1}$ to $V_{EM}$ instead of the RMS error $V_{RMSE}$.

Usually, the accuracy of the calibration control can be improved by increasing the value of M. However, as the value of M increases, the time required for the wind measurement processing and calibration control of each time increases. That is, responsiveness of the calibration control is reduced. Thus, the value of M may be freely settable by the user using the remote controller 3.

For example, the air conditioning device 200 may have an operation mode with M = 1 (hereinafter referred to as the "high-speed calibration mode"), an operation mode with M = 3 (hereinafter referred to as the "medium-speed calibration mode"), and an operation with M = 10 (hereinafter referred to as the "low-speed calibration mode"). Any operation mode may be freely selectable by the user using the remote controller 3, among the high-speed calibration mode, the medium-speed calibration mode, and the low-speed calibration mode.

Furthermore, in a case where the wind measurement lidar 11 includes a pulse modulation type lidar, when the wind measurement lidar 11 emits the laser beam in one direction D, the line-of-sight direction wind speed Vr at each of the M measurement target points P arranged along the emission direction D is measured at once. Thus, as illustrated in FIG. 10, M measurement target areas $A1_1$ to $A1_M$ can be set at once. In the example illustrated in FIG. 10, M = 5.

In this case, the M first measured wind direction values $\Phi_{L1}$ to $\Phi_{LM}$ calculated in step ST11a may have a one-to-one correspondence with the M measurement target areas $A1_1$ to $A1_M$. The M second measured wind direction values $\Theta_{L1}$ to $\Theta_{LM}$ calculated in step ST21a may have a one-to-one correspondence with the M measurement target areas $A1_1$ to $A1_M$. The M measured wind speed values $V_{L1}$ to $V_{LM}$ calculated in step ST31a may have a one-to-one correspondence with the M measurement target areas $A1_1$ to $A1_M$.

However, the value of M in this case is a different value depending on a maximum measurable distance by the wind measurement lidar 11, and a distance resolution by the wind measurement lidar 11. Furthermore, the value of M in this case is a different value depending on presence or absence of a hard target in the emission direction D, a distance between the wind measurement lidar 11 and the hard target when the hard target is present, and the like.

Next, other modifications of the air conditioning device 200 will be described.

First, a control method for the blowing air volume V' by the blowing air volume control unit 42 is not limited to the method of controlling the rotation speed of the rotor in the drive motor 43. For example, the indoor unit 1 may include a damper (not illustrated) for air volume adjustment. The blowing air volume control unit 42 may control the blowing air volume V' by controlling the damper, that is, by changing a duct resistance curve.

Furthermore, a measurement target by the wind measurement processing does not have to include the wind speed V (that is, may include only the wind directions Φ and Θ), and a calibration target by the calibration control does not have to include the blowing air volume V' (that is, may include only the blowing directions Φ' and Θ'). However, from a viewpoint of further improving the user comfort in the air conditioning target space S, it is more preferable to include the wind speed V in the measurement target and include the blowing air volume V' in the calibration target.

Furthermore, from a viewpoint of speeding up the calibration control, only the wind direction with respect to the horizontal direction may be a target of calibration. In this case, the value of N mentioned above may be 2. Furthermore, in this case, the term of $Vw \times \sin\theta$ in the expression (1) mentioned above is unnecessary.

Furthermore, the air conditioning device 200 is only required to be a device for air conditioning, and is not limited to the air-conditioner. For example, the air conditioning device 200 may include a fan, a blower, or an air duct device.

As described above, the air conditioning device 200 of the first embodiment includes the wind measurement processing unit 51 for calculating the wind directions Φ and Θ using the measured values by the wind measurement lidar 11, and the blowing control unit 52 for controlling the blowing directions Φ' and Θ' using the wind direction values $\Phi_L$ and $\Theta_L$ calculated by the wind measurement processing unit 51. As a result, the wind directions Φ and Θ in the air conditioning target space S can be measured by using the wind measurement lidar 11 integrated with the air conditioning device 200. Furthermore, the measured wind direction values $\Phi_L$ and $\Theta_L$ can be used for the control of the blowing directions Φ' and Θ'. As a result, the user comfort in the air conditioning target space S can be improved.

Furthermore, the wind measurement processing unit 51 calculates the wind directions Φ and Θ continuously in time, and the blowing control unit 52 controls the blowing directions Φ' and Θ'by feedback control for bringing the wind direction values $\Phi_L$ and $\Theta_L$ closer to the target wind direction values $\Phi_A$ and $\Theta_A$. As a result, calibration of the blowing directions Φ' and Θ' can be implemented by the feedback control.

Furthermore, the wind measurement processing unit 51 calculates the wind speed V using the measured value by the wind measurement lidar 11, and the blowing control unit 52 controls the blowing air volume V' using the wind speed value $V_L$ calculated by the wind measurement processing unit 51. As a result, the wind speed V in the air conditioning target space S can be measured by using the wind measurement lidar 11 integrated with the air conditioning device 200. Furthermore, the measured wind speed value $V_L$ can be used for the control of the blowing air volume V'. As a result, the user comfort in the air conditioning target space S can be further improved.

Furthermore, the wind measurement processing unit 51 calculates the wind directions Φ and Θ and the wind speed V continuously in time, and the blowing control unit 52 controls the blowing directions Φ' and Θ' by feedback control for bringing the wind direction values $\Phi_L$ and $\Theta_L$ closer to the target wind direction values $\Phi_A$ and ΘA, and controls the blowing air volume V' by feedback control for bringing the wind speed value $V_L$ closer to the target wind speed value $V_A$. As a result, calibration can be implemented of the blowing directions Φ' and Θ' and the blowing air volume V' by the feedback control.

Furthermore, the control method of the first embodiment is a control method for the air conditioning device 200, and the wind measurement processing unit 51 calculates the wind directions Φ and Θ by using the wind measurement lidar 11, and the blowing control unit 52 controls the blowing directions Φ' and Θ' using the wind direction values $\Phi_L$ and $\Theta_L$ calculated by the wind measurement processing unit 51. As a result, as described above, the user comfort in the air conditioning target space S can be further improved.

Second Embodiment of the invention.

FIG. 11 is a block diagram illustrating a main part of an air conditioning device according to a second embodiment. FIG. 12 is a block diagram illustrating a main part of an indoor unit of the air conditioning device according to the second embodiment. An air conditioning device 200a of the second embodiment will be described with reference to FIGS. 11 and 12. In FIG. 11, blocks similar to the blocks illustrated in FIG. 1 are designated by the same reference numerals, and the description thereof will be omitted. In FIG. 12, blocks similar to the blocks illustrated in FIG. 2 are designated by the same reference numerals, and the description thereof will be omitted.

As described in the first embodiment, the wind measurement lidar 11 includes, for example, a pulse modulation type lidar, a CW type lidar, or a lidar of a type using intensity correlation. These lidars can of course be used for measurement of the line-of-sight direction wind speed Vr (that is, measurement of the wind directions Φ and Θ and wind speed V), and can also be used for detection of an object such as a person (that is, a hard target) in the air conditioning target space S.

That is, the wind measurement lidar 11 emits a laser beam in any direction D, whereby a distance-intensity characteristic in the direction D is obtained. Furthermore, an amount of movement of the object in the direction D (more specifically, Doppler quantity corresponding to a moving velocity of the object in the direction D) is obtained. Thus, the wind measurement lidar 11 generates a so-called "intensity image" and "distance image" by performing scanning of the laser beam in the air conditioning target space S. Each pixel in the intensity image indicates an intensity value of a received signal obtained by emitting the laser beam in the direction D corresponding to the pixel. Each pixel in the distance image indicates a distance value obtained by emitting the laser beam in the direction D corresponding to the pixel. The wind measurement lidar 11 outputs intensity image information indicating the generated intensity image, distance image information indicating the generated distance image, and the like. Hereinafter, these images may be collectively referred to as the "lidar image".

A human detection processing unit 71 executes processing of detecting an object such as a person in the air conditioning target space S (hereinafter referred to as the "human detection processing") using output information by the wind measurement lidar 11. The human detection processing unit 71 outputs information indicating a result of the human detection processing (hereinafter referred to as the "detection result information"). Hereinafter, a specific example of the human detection processing will be described.

First, the human detection processing includes processing of determining presence or absence of a person in the air conditioning target space S (hereinafter referred to as the "human presence/absence determination processing"). That is, the human presence/absence determination processing determines whether it is a state in which there is a person in the air conditioning target space S (hereinafter referred to as the "present state") or it is a state in which there is no person in the air conditioning target space S (hereinafter referred to as the "absent state").

Specifically, for example, the human detection processing unit 71 executes threshold processing for the intensity image, and pattern matching processing for the intensity image or the distance image, thereby determining whether or not a pixel group corresponding to a person is included in the lidar image. When the pixel group corresponding to a person is included in the lidar image, the human detection processing unit 71 determines that the air conditioning target space S is in the present state. On the other hand, when the pixel group corresponding to a person is not included in the lidar image, the human detection processing unit 71 determines that the air conditioning target space S is in the absent state.

Secondly, the human detection processing may include processing of determining presence or absence of a moving object in the air conditioning target space S (hereinafter referred to as the "moving object presence/absence determination processing").

Specifically, for example, the human detection processing unit 71 compares an intensity value I of each pixel in the lidar image with a predetermined threshold value Ith. Furthermore, the human detection processing unit 71 compares the absolute value |ρ| of Doppler quantity ρ of each pixel in the lidar image with a predetermined threshold value ρth. When the number of pixels satisfying the condition indicated in the following expression (5) and the condition indicated in the following expression (6) is greater than or equal to a predetermined number, the human detection processing unit 71 determines that a moving object is present in the air conditioning target space S.

$$I > Ith \qquad (5)$$

$$|\rho| > \rho th \qquad (6)$$

Here, in a case where the air conditioning target space S is in the present state, the pixel group corresponding to the person is included in the lidar image. The determination using the expressions (5) and (6) for the pixel group corresponding to the person is also a determination of whether it is a state in which the person is moving or it is a state in which the person is not moving (hereinafter referred to as the "stationary state"). That is, the moving object presence/absence determination processing in the case where the air conditioning target space S is in the present state includes processing of determining whether or not a person in the air conditioning target space S is in the stationary state.

Each of the wind measurement processing unit 51 and the blowing control unit 52 acquires the detection result information output by the human detection processing unit 71. The wind measurement processing unit 51 determines whether or not to execute the wind measurement processing, by using the acquired detection result information. The blowing control unit 52 determines whether or not to execute the calibration control, by using the acquired detection result information.

Specifically, for example, in a case where the detection result information indicates that the air conditioning target space S is in the absent state, the wind measurement processing and the calibration control are executed. On the other hand, in a case where the detection result information indicates that the air conditioning target space S is in the present state, the wind measurement processing and the calibration control are skipped.

Alternatively, for example, in the case where the detection result information indicates that the air conditioning target space S is in the absent state, the wind measurement processing and the calibration control are executed. Furthermore, in the case where the detection result information indicates that the air conditioning target space S is in the present state, when the detection result information indicates that a moving object is not present in the air conditioning target space S (that is, when the detection result information indicates that a person in the air conditioning target space S is in the stationary state), the wind measurement processing and the calibration control are executed. On the other hand, in the case where the detection result information indicates that the air conditioning target space S is in the present state, when the detection result information indicates that a moving object is present in the air conditioning target space S, the wind measurement processing and the calibration control are skipped.

That is, in the air conditioning device 200a, the wind measurement processing and the calibration control are executed when these conditions are satisfied. Hereinafter, such an operation mode in which the wind measurement processing and the calibration control are executed is referred to as the "first calibration mode". Turning on and off of the first calibration mode is freely switchable by the remote controller 3.

The wind measurement processing unit 51, the blowing control unit 52, and the human detection processing unit 71 constitute a main part of a control device 100a. The wind measurement lidar 11, the drive motor 23, the first wind direction plate 24, the drive motor 33, the second wind direction plate 34, the drive motor 43, the blowing fan 44, and the control device 100a constitute a main part of an indoor unit 1a. The indoor unit 1a and the outdoor unit 2 constitute a main part of the air conditioning device 200a.

Since a hardware configuration of the main part of the control device 100a is similar to that described with reference to FIG. 6 in the first embodiment, illustration and description will be omitted. That is, a function of each of the wind measurement processing unit 51, the blowing control unit 52, and the human detection processing unit 71 may be implemented by the processor 61 and the memory 62, or may be implemented by the dedicated processing circuit 63.

Next, the operation of the control device 100a will be described with reference to a flowchart of FIG. 13. In FIG. 13, steps similar to the steps illustrated in FIG. 7 are designated by the same reference numerals and the description thereof will be omitted.

As illustrated in FIG. 13A, first, the blowing control unit 52 executes initial setting of the blowing directions Φ' and Θ' and the blowing air volume V' (step ST1). Next, the blowing control unit 52 executes control to start blowing by the indoor unit 1a (step ST2).

After that, while the blowing by the indoor unit 1a is executed, processing illustrated in FIG. 13B or processing illustrated in FIG. 13C is repeatedly executed. That is, when the first calibration mode is set to be turned on by the remote controller 3 (step ST41 "YES"), the following processing is repeatedly executed.

In the example illustrated in FIG. 13B, in step ST42, the human detection processing unit 71 executes the human detection processing. More specifically, the human detection processing unit 71 executes the human presence/absence determination processing.

In a case where it is determined by the human presence/absence determination processing that the air conditioning target space S is in the absent state (step ST43 "YES"), the wind measurement processing (step ST3) and the calibration control (step ST4) are executed. Since the detailed processing contents of steps ST3 and ST4 are similar to those described with reference to FIG. 8 or 9 in the first embodiment, the repeated description thereof will be omitted.

On the other hand, in a case where it is determined by the human presence/absence determination processing that the air conditioning target space S is in the present state (step ST43 "NO"), the wind measurement processing (step ST3) and the calibration control (step ST4) are skipped.

In the example illustrated in FIG. 13C, in step ST42, the human detection processing unit 71 executes the human detection processing. More specifically, the human detection processing unit 71 executes the human presence/absence determination processing and the moving object presence/absence determination processing.

In a case where it is determined by the human presence/absence determination processing that the air conditioning target space S is in the absent state (step ST43 "YES"), the wind measurement processing (step ST3) and the calibration control (step ST4) are executed. Furthermore, in a case where it is determined by the human presence/absence determination processing that the air conditioning target space S is in the present state (step ST43 "NO"), when it is determined by the moving object presence/absence determination processing that a moving object is not present in the air conditioning target space S (step ST44 "NO"), that is, when it is determined that a person in the air conditioning target space S is in the stationary state, the wind measurement processing (step ST3) and the calibration control (step ST4) are executed. Since the detailed processing contents of steps ST3 and ST4 are similar to those described with reference to FIG. 8 or 10 in the first embodiment, the repeated description thereof will be omitted.

On the other hand, in a case where it is determined by the human presence/absence determination processing that the air conditioning target space S is in the present state (step ST43 "NO"), when it is determined by the moving object presence/absence determination processing that a moving object is present in the air conditioning target space S (step ST44 "YES"), the wind measurement processing (step ST3) and the calibration control (step ST4) are skipped.

Note that, when the first calibration mode is set to be turned on (step ST41 "YES"), the control device 100a may execute control of causing a display unit (not illustrated) to display an image indicating that the wind measurement processing and the calibration control in the first calibration mode will be started. The display unit may be provided on the indoor unit 1a, or may be provided on the remote controller 3.

Next, effects of the air conditioning device 200a will be described.

If a user is in the air conditioning target space S and the wind measurement processing is executed in a state in which the user is moving, the measurement accuracy of the wind direction Φ and O and the wind speed V may decrease due to an air flow generated depending on the user's movement. Furthermore, if the calibration control is executed in a state in which a user is in the air conditioning target space S, due to the change in the blowing directions Φ' and Θ' and the blowing air volume V' depending on the calibration values $\Phi_C$, Oc, and Vc, the user may feel uncomfortable.

On the other hand, occurrence of these problems can be avoided by executing the wind measurement processing and the calibration control in a case where the air conditioning target space S is in the absent state. That is, it is possible to avoid a decrease in the measurement accuracy of the wind directions Φ and Θ and the wind speed V Furthermore, it is possible to avoid that the user feels uncomfortable with changes in the blowing direction Φ' and Θ' and the blowing air volume V'.

Furthermore, in the case where the air conditioning target space S is in the present state, when a moving object is not present in the air conditioning target space S (that is, when a person in the air conditioning target space S is in the stationary state), the wind measurement processing and the calibration control are executed, whereby occurrence of the former problem can be avoided. That is, it is possible to avoid a decrease in the measurement accuracy of the wind directions Φ and Θ and the wind speed V

Next, a modification of the air conditioning device 200a will be described.

The indoor unit 1a may include an infrared camera 12 in addition to the wind measurement lidar 11 (see FIG. 14 or 15). The infrared camera 12 generates a so-called "infrared image" by imaging an area in of the air conditioning target space S. The infrared camera 12 outputs infrared image information indicating the generated infrared image, and the like.

When the indoor unit 1a is provided with the infrared camera 12, the human detection processing unit 71 may use output information (infrared image information and the like) by the infrared camera 12 for the human detection processing, instead of the output information (intensity image information, distance image information, and the like) by the wind measurement lidar 11 (see FIG. 14). As a result, it is possible to eliminate the need for scanning of the laser beam for the human detection processing, so that a time required for the human detection processing can be shortened.

However, the infrared image in the infrared camera 12 corresponds to the intensity image in the wind measurement lidar 11. Thus, when the output information by the infrared camera 12 is used instead of the output information by the wind measurement lidar 11, the intensity value of each pixel can be acquired, but the distance value, Doppler quantity, and the like of each pixel cannot be acquired.

Thus, when the indoor unit 1a is provided with the infrared camera 12, it is more preferable that the human detection processing unit 71 uses the output information by the infrared camera 12 in addition to the output information by the wind measurement lidar 11 for the human detection processing (see FIG. 15). As a result, types of the information used for the human detection processing increase, so that the accuracy of the human detection processing can be improved.

In addition, the air conditioning device 200a can adopt various modifications similar to those described in the first embodiment.

As described above, the air conditioning device 200a of the second embodiment includes the human detection processing unit 71 for executing the human detection processing in the air conditioning target space S, and the blowing control unit 52 determines whether or not to execute the control of the blowing directions Φ' and Θ' using the wind direction values $\Phi_L$ and $\Theta_L$, on the basis of the result of the human detection processing. The calibration accuracy of the blowing directions Φ' and Θ' can be improved by improving the measurement accuracy of the wind directions Φ and Θ.

Furthermore, in a case where the result of the human detection processing indicates that the air conditioning target space S is in the absent state, the blowing control unit 52 executes the control of the blowing directions Φ' and Θ' using the wind direction values $\Phi_L$ and $\Theta_L$. As a result, the calibration accuracy of the blowing directions Φ' and Θ' can of course be improved, and it is possible to avoid that a user in the air conditioning target space S feels uncomfortable with the changes in the blowing directions Φ' and Θ' due to the calibration control.

Furthermore, in a case where the result of the human detection processing indicates that the air conditioning target space S is in the present state, when the result of the human detection processing indicates that a person in the air conditioning target space S is in the stationary state, the blowing control unit 52 executes the control of the blowing directions Φ' and Θ' using the wind direction values $\Phi_L$ and $\Theta_L$. The calibration accuracy of the blowing directions Φ' and Θ' can be improved by improvement of the measurement accuracy of the wind directions Φ and Θ.

Furthermore, the air conditioning device 200a includes the human detection processing unit 71 for executing the human detection processing in the air conditioning target space S, and the blowing control unit 52 determines whether or not to execute the control of the blowing directions Φ' and Θ' using the wind direction values $\Phi_L$ and $\Theta_L$ and the control of the blowing air volume V' using the wind speed value $V_L$, on the basis of the result of the human detection processing. The calibration accuracy of the blowing directions Φ' and Θ' and the blowing air volume V' can be improved by improvement of the measurement accuracy of the wind directions Φ and Θ and the wind speed V

Furthermore, in a case where the result of the human detection processing indicates that the air conditioning target space S is in the absent state, the blowing control unit 52 executes the control of the blowing directions Φ' and Θ' using the wind direction values $\Phi_L$ and $\Theta_L$ and the control of the blowing air volume V' using the wind speed value $V_L$. As a result, the calibration accuracy of the blowing directions Φ' and Θ' and the blowing air volume V' can of course be improved, and it is possible to avoid that a user in the air conditioning target space S feels uncomfortable with the changes in the blowing directions Φ' and Θ' and the blowing air volume V' due to the calibration control.

Furthermore, in a case where the result of the human detection processing indicates that the air conditioning target space S is in the present state, when the result of the human detection processing indicates that a person in the air conditioning target space S is in the stationary state, the blowing control unit 52 executes the control of the blowing directions Φ' and Θ' using the wind direction values $\Phi_L$ and $\Theta_L$ and the control of the blowing air volume V' using the wind speed value $V_L$. The calibration accuracy of the blowing directions Φ' and Θ' and the blowing air volume V' can be improved by improvement of the measurement accuracy of the wind directions Φ and Θ and the wind speed V

Furthermore, the human detection processing unit 71 uses the wind measurement lidar 11 for the human detection processing. As a result, it is possible to eliminate the need for a dedicated detection device (for example, the infrared camera 12) for the human detection processing. Furthermore, by using the distance image information in addition to the intensity image information, the accuracy of the human detection processing can be improved.

Third Embodiment of the invention.

FIG. 16 is a block diagram illustrating a main part of an air conditioning device according to a third embodiment. FIG. 17 is a block diagram illustrating a main part of an indoor unit of the air conditioning device according to the third embodiment. An air conditioning device 200b of the third embodiment will be described with reference to FIGS. 16 and 17. In FIG. 16, blocks similar to the blocks illustrated in FIG. 1 are designated by the same reference numerals, and the description thereof will be omitted. In FIG. 17, blocks similar to the blocks illustrated in FIG. 2 are designated by the same reference numerals, and the description thereof will be omitted.

A human detection processing unit 81 executes processing of detecting an object such as a person in the air conditioning target space S, that is, the human detection processing, by using the output information by the wind measurement lidar 11. The human detection processing unit 81 outputs information indicating the result of the human detection processing, that is, the detection result information.

Here, the human detection processing by the human detection processing unit 81 includes the processing of determining presence or absence of a person in the air conditioning target space S, that is, the human presence/absence determination processing. Furthermore, in the case where the air conditioning target space S is in the present state, the human detection processing by the human detection processing unit 81 includes processing of measuring a position of the person in the air conditioning target space S (hereinafter referred to as the "human position measurement processing").

The blowing control unit 52 has a function of implementing so-called "human-targeted" blowing, by using the detection result information output by the human detection processing unit 81.

That is, first, the first blowing direction control unit 22 sets the first blowing direction Φ' to the initial value. Furthermore, the second blowing direction control unit 32 sets the second blowing direction Θ'to the initial value. Furthermore, the blowing air volume control unit 42 sets the blowing air volume V' to the initial value.

After that, in the case where the air conditioning target space S is in the present state, the blowing control unit 52 sets an area corresponding to the position of the person in the air conditioning target space S as an area (hereinafter, referred to as the "blowing target area".) A3 to be a target of blowing by an indoor unit 1b. The blowing control unit 52 selects a wind direction and wind speed table with which blowing for the blowing target area A3 can be implemented from among the plurality of wind direction and wind speed tables stored in advance.

The first blowing direction control unit 22 resets the first blowing direction Φ' depending on the value of Φ' in the unit area A2 corresponding to the blowing target area A3 in the selected wind direction and wind speed table. The second blowing direction control unit 32 resets the second blowing direction Θ' depending on the value of Θ' in the unit area A2 corresponding to the blowing target area A3 in the selected wind direction and wind speed table. The blowing air volume control unit 42 resets the blowing air volume V' depending on the value of V' in the unit area A2 corresponding to the blowing target area A3 in the selected wind direction and wind speed table. As a result, the human-targeted blowing is implemented.

The wind measurement processing unit 51 sets the area corresponding to the position of the person in the air conditioning target space S as the measurement target area A1, by using the detection result information output by the human detection processing unit 81. That is, in the air conditioning device 200b, at least a part of the blowing target area A3 is set as the measurement target area A1.

The wind measurement processing unit 51 executes the wind measurement processing in the set measurement target area A1. The blowing control unit 52 executes the calibration control in the set measurement target area A1 in a state in which the human-targeted blowing is implemented.

That is, in the air conditioning device 200b, the wind measurement processing and the calibration control are executed in the case where the air conditioning target space S is in the present state. Hereinafter, such an operation mode in which the wind measurement processing and the calibration control are executed is referred to as the "second calibration mode". Turning on and off of the second calibration mode is freely switchable by the remote controller 3.

The wind measurement processing unit 51, the blowing control unit 52, and the human detection processing unit 81 constitute a main part of a control device 100b. The wind measurement lidar 11, the drive motor 23, the first wind direction plate 24, the drive motor 33, the second wind direction plate 34, the drive motor 43, the blowing fan 44, and the control device 100b constitute a main part of the indoor unit 1b. The indoor unit 1b and the outdoor unit 2 constitute a main part of the air conditioning device 200b.

Since a hardware configuration of the main part of the control device 100b is similar to that described with reference to FIG. 6 in the first embodiment, illustration and description will be omitted. That is, a function of each of the wind measurement processing unit 51, the blowing control unit 52, and the human detection processing unit 81 may be implemented by the processor 61 and the memory 62, or may be implemented by the dedicated processing circuit 63.

Next, the operation of the control device 100b will be described with reference to a flowchart of FIG. 18. In FIG. 18, steps similar to the steps illustrated in FIG. 7 are designated by the same reference numerals and the description thereof will be omitted.

As illustrated in FIG. 18A, first, the blowing control unit 52 executes initial setting of the blowing directions Φ' and Θ' and the blowing air volume V' (step ST1). Next, the blowing control unit 52 executes control to start blowing by the indoor unit 1b (step ST2).

After that, while the blowing by the indoor unit 1b is executed, processing illustrated in FIG. 18B is repeatedly executed. That is, when the second calibration mode is set to be turned on by the remote controller 3 (step ST51 "YES"), the following processing is repeatedly executed.

As illustrated in FIG. 18B, in step ST52, the human detection processing unit 81 executes the human detection processing. More specifically, the human detection processing unit 81 executes the human presence/absence determination processing. Furthermore, in the case where it is determined by the human presence/absence determination processing that the air conditioning target space S is in the present state, the human detection processing unit 81 executes the human position measurement processing.

In the case where it is determined by the human presence/absence determination processing that the air conditioning target space S is in the present state (step ST53 "YES"), the blowing control unit 52 sets the blowing target area A3 by using the detection result information. More specifically, the blowing control unit 52 sets the area corresponding to the position of the person in the air conditioning target space S as the blowing target area A3 on the basis of a result of the human position measurement processing (step ST54).

Next, the blowing control unit 52 resets the blowing directions Φ' and Θ' and the blowing air volume V' so that the blowing for the blowing target area A3 set in step ST54 is implemented (step ST55). Due to the resetting while the blowing by the indoor unit 1b is executed, the human-targeted blowing is started.

Next, the wind measurement processing unit 51 sets the measurement target area A1 by using the detection result information. More specifically, the wind measurement processing unit 51 sets the area corresponding to the position of the person in the air conditioning target space S as the measurement target area A1 on the basis of the result of the human position measurement processing (step ST56).

Next, the wind measurement processing (step ST3) and the calibration control (step ST4) are executed for the measurement target area A1 set in step ST56. Since the detailed processing contents of steps ST3 and ST4 are similar to those described with reference to FIG. 8 or 10 in the first embodiment, the repeated description thereof will be omitted. However, the target values $\Phi_A$, $\Theta_A$, and $V_A$ in the calibration control are set depending on the set values of Φ', Θ', and V' in step ST55 instead of the set values of Φ', O', and V' in step ST1.

The blowing target area A3 is set depending on the result of the human position measurement processing in this way, whereby the human-targeted blowing can be implemented. Furthermore, the measurement target area A1 is set depending on the result of the human position measurement processing, whereby the wind directions Φ and Θ and the wind speed V in an area corresponding to a position of the user in the air conditioning target space S can be brought into suitable states. As a result, the user comfort in the air conditioning target space S can be further improved.

Note that, the air conditioning device 200b may operate in the following operation mode after the second calibration mode is turned off (step ST51 "NO"). That is, it is an operation mode in which the blowing directions Φ' and Θ' and the blowing air volume V' are controlled using the wind direction and wind speed table stored in advance and the calibration value table at a time when the second calibration mode is turned off (that is, the latest calibration value table), without executing the wind measurement processing, the calibration control, the human detection processing, and the human-targeted blowing in a state in which the power of the wind measurement lidar 11 is turned off. This operation mode may be, for example, referred to by the name of the "energy saving mode". Turning on and off of the energy saving mode may be freely switchable by the remote controller 3.

Alternatively, the air conditioning device 200b may operate in the following operation mode after the second calibration mode is turned off (step ST51 "NO"). That is, it is an operation mode in which the wind measurement processing and the calibration control are not executed, but the human detection processing and the human-targeted blowing are executed, in a state in which the power of the wind measurement lidar 11 is turned on. This operation mode may be, for example, referred to by the name of the "high-precision human-targeted mode". Turning on and off of the high-precision human-targeted mode may be freely switchable by the remote controller 3.

Furthermore, the human detection processing unit 81 may use the infrared camera 12 for the human detection processing instead of or in addition to the wind measurement lidar 11, similarly to the human detection processing unit 71.

In addition, the air conditioning device 200b can adopt various modifications similar to those described in the first embodiment.

As described above, the air conditioning device 200b of the third embodiment includes the human detection processing unit 81 for executing the human detection processing in the air conditioning target space S, and the wind measurement processing unit 51 sets the measurement target area A1 for the wind directions Φ and Θ in the air conditioning target space S on the basis of the result of the human detection processing. As a result, for example, it is possible to measure the wind directions Φ and Θ in the area corresponding to the position of the user in the air conditioning target space S.

Furthermore, the air conditioning device 200b includes the human detection processing unit 81 for executing the human detection processing in the air conditioning target space S, and the wind measurement processing unit 51 sets the measurement target area A1 for the wind directions Φ and Θ and the wind speed V in the air conditioning target space S on the basis of the result of the human detection processing. As a result, for example, it is possible to measure the wind directions Φ and Θ and the wind speed V in the area corresponding to the position of the user in the air conditioning target space S.

Furthermore, the wind measurement processing unit 51 sets the area corresponding to the position of the person in the air conditioning target space S as the measurement target area A1. As a result, an appropriate area can be set as the measurement target area A1 depending on the position of the user in the air conditioning target space S.

Furthermore, the human detection processing unit 81 uses the wind measurement lidar 11 for the human detection processing. As a result, it is possible to eliminate the need for a dedicated detection device (for example, the infrared camera 12) for the human detection processing. Furthermore, by using the distance image information in addition to the intensity image information, the accuracy of the human detection processing can be improved.

.

## INDUSTRIAL APPLICABILITY

The air conditioning device and control method of the present invention can be used, for example, in an air-conditioner for home use or for business use.

## REFERENCE SIGNS LIST

1, 1a, 1b: indoor unit, 2: outdoor unit, 3: remote controller (remote controller), 11: wind measurement lidar, 12: infrared camera, 21: first wind direction measurement processing unit, 22: first blowing direction control unit, 23: drive motor, 24: wind direction plate (first wind direction plate), 31: second wind direction measurement processing unit, 32: second blowing direction control unit, 33: drive motor, 34: wind direction plate (second wind direction plate), 41: wind speed measurement processing unit, 42: blowing air volume control unit, 43: drive motor, 44: blowing fan, 51: wind measurement processing unit, 52: blowing control unit, 61: processor, 62: memory, 63: processing circuit, 71: human detection processing unit, 81: human detection processing unit, 100, 100a, 100b: control device, 200, 200a, 200b: air conditioning device

## Claims

1. An air conditioning device (200, 200a, 200b) comprising:

   an indoor unit (1, 1, 1b); and
   an outdoor unit (2),
   wherein the indoor unit (1, 1a, 1b) comprises
   a lidar (11) configured to measure a line-of sight direction wind speed ;
   a wind measurement processing unit (51) configured to calculate a wind direction value ($\Phi_L$, $\Theta_L$) indicating a wind direction ($\Phi$, O) using a value measured by the lidar (11); and
   a blowing control unit (52) configured to execute control of a blowing direction ($\Phi$', O') using the wind direction value ($\Phi_L$, $\Theta_L$) calculated by the wind measurement processing unit (51).

2. The air conditioning device (200, 200a, 200b) according to claim 1, wherein

   the wind measurement processing unit (51) is configured to calculate the wind direction value ($\Phi_L$, $\Theta_L$) continuously in time, and
   the blowing control unit (52) is configured to control the blowing direction ($\Phi$', O') by feedback control for bringing the wind direction value ($\Phi_L$, $\Theta_L$) closer to a target wind direction value ($\Phi_A$, $\Theta_A$).

3. The air conditioning device (200, 200a, 200b) according to claim 1, wherein

   the wind measurement processing unit (51) is configured to calculate a wind speed value ($V_L$) indicating a wind speed (V) using a value measured by the lidar (11), and
   the blowing control unit (52) is configured to execute control of a blowing air volume (V') using a wind speed value ($V_L$) calculated by the wind measurement processing unit (51).

4. The air conditioning device (200, 200a, 200b) according to claim 3, wherein

   the wind measurement processing unit (51) is configured to calculate the wind direction value ($\Phi_L$, $\Theta_L$) and the wind speed value ($V_L$) continuously in time, and
   the blowing control unit (52) is configured to control the blowing direction ($\Phi$', O') by feedback control for bringing the wind direction value ($\Phi_L$, $\Theta_L$) closer to a target wind direction value ($\Phi_A$, $\Theta_A$), and is configured to execute the control of the blowing air volume (V') by feedback control for bringing the wind speed value ($V_L$) closer to a target wind speed value ($V_A$).

5. The air conditioning device (200a) according to claim 1, further comprising

   a human detection processing unit (71) configured to execute human detection processing in an air conditioning target space (S), wherein
   the blowing control unit (52) is configured to determine whether or not to execute the control of the blowing direction ($\Phi$', O') using the wind direction value ($\Phi_L$, $\Theta_L$), on a basis of a result of the human detection processing.

6. The air conditioning device (200a) according to claim 5, wherein in a case where the result of the human detection processing indicates that the air conditioning target space (S) is in an absent state indicating that there is no person, the blowing control unit (52) is configured to execute the control of the blowing direction (Φ', O') using the wind direction value ($\Phi_L$, $\Theta_L$).

7. The air conditioning device (200a) according to claim 5 or 6, wherein in a case where the result of the human detection processing indicates that the air conditioning target space (S) is in a present state indicating that there is a person, when the result of the human detection processing indicates that a person in the air conditioning target space (S) is in a stationary state, the blowing control unit (52) is configured to execute the control of the blowing direction (Φ', O') using the wind direction value ($\Phi_L$, $\Theta_L$).

8. The air conditioning device (200a) according to claim 3, further comprising

a human detection processing unit (71) configured to execute human detection processing in an air conditioning target space (S), wherein
the blowing control unit (52) is configured to determine whether or not to execute the control of the blowing direction (Φ', O') using the wind direction value ($\Phi_L$, $\Theta_L$) and the control of the blowing air volume (V') using the wind speed value ($V_L$), on a basis of a result of the human detection processing.

9. The air conditioning device (200a) according to claim 8, wherein in a case where the result of the human detection processing indicates that the air conditioning target space (S) is in an absent state indicating that there is no person, the blowing control unit (52) is configured to execute the control of the blowing direction (Φ', O') using the wind direction value ($\Phi_L$, $\Theta_L$) and the control of the blowing air volume (V') using the wind speed value ($V_L$).

10. The air conditioning device (200a) according to claim 8 or 9, wherein in a case where the result of the human detection processing indicates that the air conditioning target space (S) is in a present state indicating that there is a person, when the result of the human detection processing indicates that a person in the air conditioning target space (S) is in a stationary state, the blowing control unit (52) is configured to execute the control of the blowing direction (Φ', O') using the wind direction value ($\Phi_L$, $\Theta_L$) and the control of the blowing air volume (V') using the wind speed value ($V_L$).

11. The air conditioning device (200b) according to claim 1, further comprising

a human detection processing unit (81) configured to execute human detection processing in an air conditioning target space (S), wherein
the wind measurement processing unit (51) is configured to set a measurement target area (A1) for the wind direction (Φ, O) in the air conditioning target space on a basis of a result of the human detection processing.

12. The air conditioning device (200b) according to claim 3, further comprising

a human detection processing unit (81) is configured to execute human detection processing in an air conditioning target space (S), wherein
the wind measurement processing unit (51) is configured to set a measurement target area (A1) for the wind direction (Φ, O) and the wind speed (V) in the air conditioning target space on a basis of a result of the human detection processing.

13. The air conditioning device (200b) according to claim 11 or 12, wherein the wind measurement processing unit (51) is configured to set an area corresponding to a position of a person in the air conditioning target space (S) as the measurement target area (A1).

14. The air conditioning device (200a, 200b) according to any one of claims 5 to 13, wherein the human detection processing unit (71, 81) is configured to use the lidar (11) for the human detection processing.

15. A control method for an air conditioning device (200a, 200b),
the control method comprising:

measuring a line-of-sight direction wind speed with a lidar (11) of the air conditioning device (200a, 200b);
calculating, by a wind measurement processing unit (51), a wind direction value ($\Phi_L$, $\Theta_L$) indicating a wind direction (Φ, O) using a value measured by the lidar (11); and
executing, by a blowing control unit (52), control of a blowing direction (Φ', O') using a wind direction value ($\Phi_L$, $\Theta_L$) calculated by the wind measurement processing unit (51).

## Patentansprüche

1. Klimaanlage (200, 200a, 200b), umfassend:

eine Inneneinheit (1, 1, 1b); und
eine Außeneinheit (2),
wobei die Inneneinheit (1, 1a, 1b) umfasst:

ein Lidar (11), das eingerichtet ist, eine Windgeschwindigkeit in Sichtrichtung zu messen;
eine Windmessungs-Verarbeitungseinheit (51), die eingerichtet ist, einen Windrichtungswert ($\Phi_L$, $\Theta_L$), der eine Windrichtung ($\Phi$, $\Theta$) angibt, unter Verwendung eines von dem Lidar (11) gemessenen Wertes zu berechnen; und
eine Gebläsesteuereinheit (52), die eingerichtet ist, eine Steuerung einer Gebläserichtung ($\Phi'$, $\Theta'$) unter Verwendung des von der Windmessungs-Verarbeitungseinheit (51) berechneten Windrichtungswertes ($\Phi_L$, $\Theta_L$) auszuführen.

**2.** Klimaanlage (200, 200a, 200b) nach Anspruch 1, wobei

die Windmessungs-Verarbeitungseinheit (51) eingerichtet ist, den Windrichtungswert ($\Phi_L$, $\Theta_L$) kontinuierlich in der Zeit zu berechnen, und
die Gebläsesteuereinheit (52) eingerichtet ist, die Gebläserichtung ($\Phi'$, $\Theta'$) durch Rückkopplungssteuerung zu steuern, um den Windrichtungswert ($\Phi_L$, $\Theta_L$) näher an einen Zielwindrichtungswert ($\Phi_A$, $\Theta_A$) zu bringen.

**3.** Klimaanlage (200, 200a, 200b) nach Anspruch 1, wobei

die Windmessungs-Verarbeitungseinheit (51) eingerichtet ist, einen Windgeschwindigkeitswert ($V_L$), der eine Windgeschwindigkeit (V) angibt, unter Verwendung eines von dem Lidar (11) gemessenen Wertes zu berechnen, und
die Gebläsesteuereinheit (52) eingerichtet ist, eine Steuerung eines Blasluftvolumens (V) unter Verwendung eines von der Windmessverarbeitungseinheit (51) berechneten Windgeschwindigkeitswertes ($V_L$) auszuführen.

**4.** Klimaanlage (200, 200a, 200b) nach Anspruch 3, wobei

die Windmessungs-Verarbeitungseinheit (51) eingerichtet ist, den Windrichtungswert ($\Phi_L$, $\Theta_L$) und den Windgeschwindigkeitswert ($V_L$) kontinuierlich in der Zeit zu berechnen, und
die Gebläsesteuereinheit (52) eingerichtet ist, die Gebläserichtung ($\Phi'$, $\Theta'$) durch Rückkopplungssteuerung zu steuern, um den Windrichtungswert ($\Phi_L$, $\Theta_L$) näher an einen Zielwindrichtungswert ($\Phi_A$, $\Theta_A$) zu bringen, und eingerichtet ist, die Steuerung des Blasluftvolumens (V) durch Rückkopplungssteuerung auszuführen, um den Windgeschwindigkeitswert ($V_L$) näher an einen Zielwindgeschwindigkeitswert ($V_A$) zu bringen.

**5.** Klimaanlage (200a) nach Anspruch 1, ferner umfassend

eine Personendetektions-Verarbeitungseinheit (71), die eingerichtet ist, eine Personendetektionsverarbeitung in einem Klimatisierungszielraum (S) auszuführen, wobei
die Gebläsesteuereinheit (52) eingerichtet ist, anhand des Windrichtungswerts ($\Phi_L$, $\Theta_L$) zu bestimmen, ob die Steuerung der Gebläserichtung ($\Phi'$, $\Theta'$) ausgeführt werden soll oder nicht, und zwar auf der Grundlage eines Ergebnisses der Personendetektiosverarbeitung.

**6.** Klimaanlage (200a) nach Anspruch 5, wobei in einem Fall, in dem das Ergebnis der Personendetektionsverarbeitung anzeigt, dass sich der Klimatisierungszielraum (S) in einem Abwesenheitszustand befindet, der anzeigt, dass keine Person anwesend ist, die Gebläsesteuereinheit (52) eingerichtet ist, die Steuerung der Gebläserichtung ($\Phi'$, $\Theta'$) unter Verwendung des Windrichtungswertes ($\Phi_L$, $\Theta_L$) auszuführen.

**7.** Klimaanlage (200a) nach Anspruch 5 oder 6, wobei in einem Fall, in dem das Ergebnis der Personendetektionsverarbeitung anzeigt, dass sich der Klimatisierungszielraum (S) in einem Anwesenheitszustand befindet, der anzeigt, dass eine Person vorhanden ist, wenn das Ergebnis der Personendetektionsverarbeitung anzeigt, dass sich eine Person in dem Klimatisierungszielraum (S) in einem stationären Zustand befindet, die Gebläsesteuereinheit (52) eingerichtet ist, die Steuerung der Gebläserichtung ($\Phi'$, $\Theta'$) unter Verwendung des Windrichtungswertes ($\Phi_L$, $\Theta_L$) auszuführen.

**8.** Klimaanlage (200a) nach Anspruch 3, ferner umfassend

eine Personendetektions-Verarbeitungseinheit (71), die eingerichtet ist, eine Personendetektionsverarbeitung in einem Klimatisierungszielraum (S) auszuführen, wobei
die Gebläsesteuereinheit (52) eingerichtet ist, zu bestimmen, ob die Steuerung der Gebläserichtung ($\Phi'$, $\Theta'$) unter Verwendung des Windrichtungswertes ($\Phi_L$, $\Theta_L$) und die Steuerung des Gebläseluftvolumens (V) unter Verwendung des Windgeschwindigkeitswertes ($V_L$) auf der Grundlage eines Ergebnisses der Personendetektionsverarbeitung ausgeführt werden soll oder nicht.

9. Klimaanlage (200a) nach Anspruch 8, wobei in einem Fall, in dem das Ergebnis der Personendetektionsverarbeitung anzeigt, dass sich der Klimatisierungszielraum (S) in einem Abwesenheitszustand befindet, der anzeigt, dass keine Person anwesend ist, die Gebläsesteuereinheit (52) eingerichtet ist, die Steuerung der Gebläserichtung (Φ', Θ') unter Verwendung des Windrichtungswertes ($\Phi_L$, $\Theta_L$) und die Steuerung des Blasluftvolumens (V) unter Verwendung des Windrichtungswerts ($V_L$) auszuführen.

10. Klimaanlage (200a) nach Anspruch 8 oder 9, wobei in einem Fall, in dem das Ergebnis der Personendetektionsverarbeitung anzeigt, dass sich der Klimatisierungszielraum (S) in einem Anwesenheitszustand befindet, der anzeigt, dass eine Person vorhanden ist, wenn das Ergebnis der Personendetektionsverarbeitung anzeigt, dass sich eine Person in dem Klimatisierungszielraum (S) in einem stationären Zustand befindet, die Gebläsesteuereinheit (52) eingerichtet ist, die Steuerung der Gebläserichtung (Φ', Θ') unter Verwendung des Windrichtungswertes ($\Phi_L$, $\Theta_L$) und die Steuerung des Blasluftvolumens (V) unter Verwendung des Windrichtungswertes ($V_L$) auszuführen.

11. Klimaanlage (200b) nach Anspruch 1, ferner umfassend

eine Personendetektions-Verarbeitungseinheit (81), die eingerichtet ist, eine Personendetektionsverarbeitung in einem Klimatisierungszielraum (S) auszuführen, wobei
die Windmessungs-Verarbeitungseinheit (51) eingerichtet ist, einen Messzielbereich (A1) für die Windrichtung (Φ, Θ) in dem Klimatisierungszielraum auf der Grundlage eines Ergebnisses der Personendetektionsverarbeitung festzulegen.

12. Klimaanlage (200b) nach Anspruch 3, ferner umfassend

eine Personendetektionsverarbeitungseinheit (81), die eingerichtet ist, eine Personendetektionsverarbeitung in einem Klimatisierungszielraum (S) auszuführen, wobei
die Windmessungs-Verarbeitungseinheit (51) eingerichtet ist, einen Messzielbereich (A1) für die Windrichtung (Φ, Θ) und die Windgeschwindigkeit (V) in dem Klimatisierungszielraum auf der Grundlage eines Ergebnisses der Personendetektionsverarbeitung festzulegen.

13. Klimaanlage (200b) nach Anspruch 11 oder 12, wobei die Windmessungs-Verarbeitungseinheit (51) eingerichtet ist, einen Bereich, der einer Position einer Person in dem Klimatisierungszielraum (S) entspricht, als Messzielbereich (A1) festzulegen.

14. Klimaanlage (200a, 200b) nach einem der Ansprüche 5 bis 13, wobei die Personendetektions-Verarbeitungseinheit (71, 81) eingerichtet ist, das Lidar (11) für die Personendetektionsverarbeitung zu verwenden.

15. Steuerungsverfahren für eine Klimaanlage (200a, 200b),
wobei das Steuerungsverfahren umfasst:

Messen einer Windgeschwindigkeit in Sichtrichtung mit einem Lidar (11) der Klimaanlage (200a, 200b);
Berechnen, durch eine Windmessungs-Verarbeitungseinheit (51), eines Windrichtungswertes ($\Phi_L$, $\Theta_L$), der eine Windrichtung (Φ, Θ) angibt, unter Verwendung eines von dem Lidar (11) gemessenen Wertes; und
Ausführen, durch eine Gebläsesteuereinheit (52), der Steuerung einer Gebläserichtung (Φ', Θ') unter Verwendung eines von der Windmessungs-Verarbeitungseinheit (51) berechneten Windrichtungswertes ($\Phi_L$, $\Theta_L$).

## Revendications

1. Dispositif de climatisation (200, 200a, 200b), comprenant :

une unité intérieure (1, 1, 1b) ; et
une unité extérieure (2),
dans lequel l'unité intérieure (1, 1a, 1b) comprend
un lidar (11) configuré pour mesurer la vitesse du vent dans la direction de la ligne de visée ;
une unité de traitement de la mesure du vent (51) configurée pour calculer une valeur de direction du vent ($\Phi_L$, $\Theta_L$) indiquant une direction du vent (Φ, Θ) à l'aide d'une valeur mesurée par le lidar (11) ; et
une unité de commande de soufflage (52) configurée pour exécuter la commande d'une direction de soufflage (Φ', Θ') à l'aide de la valeur de direction du vent ($\Phi_L$, $\Theta_L$) calculée par l'unité de traitement de mesure du vent (51).

2. Dispositif de climatisation (200, 200a, 200b) selon la revendication 1, dans lequel

l'unité de traitement de la mesure du vent (51) est configurée pour calculer la valeur de la direction du vent ($\Phi_L$, $\Theta_L$) en continu dans le temps, et

l'unité de commande de soufflage (52) est configurée pour commander la direction de soufflage (Φ', Θ') par rétroaction afin de rapprocher la valeur de direction du vent ($Φ_L$, $Θ_L$) d'une valeur cible de direction du vent ($Φ_A$, $Θ_A$).

**3.** Dispositif de climatisation (200, 200a, 200b) selon la revendication 1, dans lequel

l'unité de traitement de la mesure du vent (51) est configurée pour calculer une valeur de vitesse du vent ($V_L$) indiquant une vitesse du vent (V) à l'aide d'une valeur mesurée par le lidar (11), et
l'unité de commande de soufflage (52) est configurée pour commander un volume d'air de soufflage (V') à l'aide d'une valeur de vitesse du vent ($V_L$) calculée par l'unité de traitement de la mesure du vent (51).

**4.** Dispositif de climatisation (200, 200a, 200b) selon la revendication 3, dans lequel

l'unité de traitement de la mesure du vent (51) est configurée pour calculer la valeur de direction du vent ($Φ_L$, $Θ_L$) et la valeur de vitesse du vent ($V_L$) de manière continue dans le temps, et
l'unité de commande de soufflage (52) est configurée pour commander la direction de soufflage (Φ', Θ') par rétroaction pour rapprocher la valeur de direction du vent ($Φ_L$, $Θ_L$) d'une valeur de direction du vent cible ($Φ_A$, $Θ_A$), et est configurée pour exécuter la commande du volume d'air de soufflage (V') par rétroaction pour rapprocher la valeur de vitesse du vent ($V_L$) d'une valeur de vitesse du vent cible ($V_A$).

**5.** Dispositif de climatisation (200a) selon la revendication 1, comprenant en outre :

une unité de traitement de détection de présence humaine (71) configurée pour exécuter un traitement de détection de présence humaine dans un espace cible de climatisation (S), dans lequel
l'unité de commande de soufflage (52) est configurée pour déterminer s'il faut ou non exécuter la commande de la direction de soufflage (Φ', Θ') à l'aide de la valeur de direction du vent ($Φ_L$, $Θ_L$), sur la base d'un résultat du traitement de détection de présence humaine.

**6.** Dispositif de climatisation (200a) selon la revendication 5, dans lequel, dans le cas où le résultat du traitement de détection de présence humaine indique que l'espace cible de climatisation (S) est dans un état absent indiquant qu'il n'y a personne, l'unité de commande de soufflage (52) est configurée pour exécuter la commande de la direction de soufflage (Φ', Θ') en utilisant la valeur de direction du vent ($Φ_L$, $Θ_L$).

**7.** Dispositif de climatisation (200a) selon la revendication 5 ou 6, dans lequel dans le cas où le résultat du traitement de détection de présence humaine indique que l'espace cible de climatisation (S) est dans un état présent indiquant qu'il y a une personne, lorsque le résultat du traitement de détection humaine indique qu'une personne dans l'espace cible de climatisation (S) est dans un état stationnaire, l'unité de commande de soufflage (52) est configurée pour exécuter la commande de la direction de soufflage (Φ', Θ') à l'aide de la valeur de direction du vent ($Φ_L$, $Θ_L$).

**8.** Dispositif de climatisation (200a) selon la revendication 3, comprenant en outre :

une unité de traitement de détection de présence humaine (71) configurée pour exécuter un traitement de détection de présence humaine dans un espace cible de climatisation (S), dans lequel
l'unité de commande de soufflage (52) est configurée pour déterminer s'il faut ou non exécuter la commande de la direction de soufflage (Φ', Θ') à l'aide de la valeur de direction du vent ($Φ_L$, $Θ_L$) et la commande du volume d'air de soufflage (V) à l'aide de la valeur de vitesse du vent ($V_L$), sur la base d'un résultat du traitement de détection de présence humaine.

**9.** Dispositif de climatisation (200a) selon la revendication 8, dans lequel dans le cas où le résultat du traitement de détection de présence humaine indique que l'espace cible de climatisation (S) est dans un état absent indiquant qu'il n'y a personne, l'unité de commande de soufflage (52) est configurée pour exécuter la commande de la direction de soufflage (Φ', Θ') en utilisant la valeur de direction du vent ($Φ_L$, $Θ_L$) et la commande du volume d'air de soufflage (V') à l'aide de la valeur de vitesse du vent ($V_L$).

**10.** Dispositif de climatisation (200a) selon la revendication 8 ou 9, dans lequel dans le cas où le résultat du traitement de détection de présence humaine indique que l'espace cible de climatisation (S) est dans un état présent indiquant qu'il y a une personne, lorsque le résultat du traitement de détection de présence humaine indique qu'une personne dans l'espace cible de climatisation (S) est dans un état stationnaire, l'unité de commande de soufflage (52) est configurée pour exécuter la commande de la direction de soufflage (Φ', Θ') à l'aide de la valeur de direction du vent ($Φ_L$, $Θ_L$) et la commande du volume d'air de soufflage (V') à l'aide de la valeur de vitesse du vent

($V_L$).

**11.** Dispositif de climatisation (200b) selon la revendication 1, comprenant en outre

une unité de traitement de détection de présence humaine (81) configurée pour exécuter un traitement de détection de présence humaine dans un espace cible de climatisation (S), dans laquelle
l'unité de traitement de mesure du vent (51) est configurée pour définir une zone cible de mesure (A1) pour la direction du vent ($\Phi$, $\Theta$) dans l'espace cible de climatisation sur la base d'un résultat du traitement de détection de présence humaine.

**12.** Dispositif de climatisation (200b) selon la revendication 3, comprenant en outre

une unité de traitement de détection de présence humaine (81) est configurée pour exécuter un traitement de détection de présence humaine dans un espace cible de climatisation (S),
l'unité de traitement de mesure du vent (51) étant configurée pour définir une zone cible de mesure (A1) pour la direction du vent ($\Phi$, $\Theta$) et la vitesse du vent (V) dans l'espace cible de climatisation sur la base d'un résultat du traitement de détection de présence humaine.

**13.** Dispositif de climatisation (200b) selon la revendication 11 ou 12, dans lequel l'unité de traitement de la mesure du vent (51) est configurée pour définir une zone correspondant à la position d'une personne dans l'espace cible de climatisation (S) comme zone cible de mesure (A1).

**14.** Dispositif de climatisation (200a, 200b) selon l'une quelconque des revendications 5 à 13, dans lequel l'unité de traitement de détection de présence humaine (71, 81) est configurée pour utiliser le lidar (11) pour le traitement de détection de présence humaine.

**15.** Procédé de commande pour un dispositif de climatisation (200a, 200b),
le procédé de commande comprenant :

mesurer la vitesse du vent dans la direction de la ligne de visée à l'aide d'un lidar (11) du dispositif de climatisation (200a, 200b) ;
calculer, par le biais d'une unité de traitement de mesure du vent (51), une valeur de direction du vent ($\Phi_L$, $\Theta_L$) indiquant une direction du vent ($\Phi$, $\Theta$) à l'aide d'une valeur mesurée par le lidar (11) ; et
exécuter, par le biais d'une unité de commande de soufflage (52), la commande d'une direction de soufflage ($\Phi'$, $\Theta'$) à l'aide d'une valeur de direction du vent ($\Phi_L$, $\Theta_L$) calculée par l'unité de traitement de mesure du vent (51).

FIG. 1

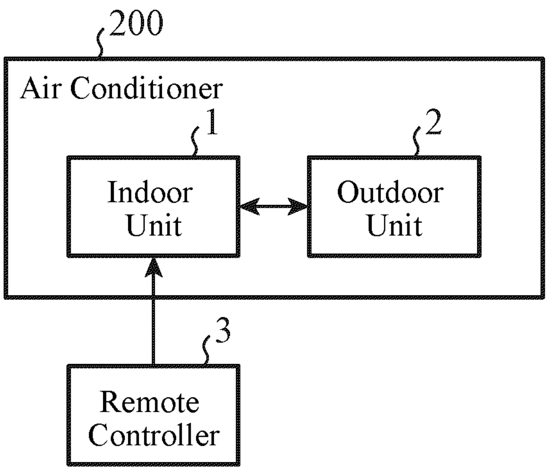
200
Air Conditioner
1
Indoor Unit
2
Outdoor Unit
3
Remote Controller

FIG. 2

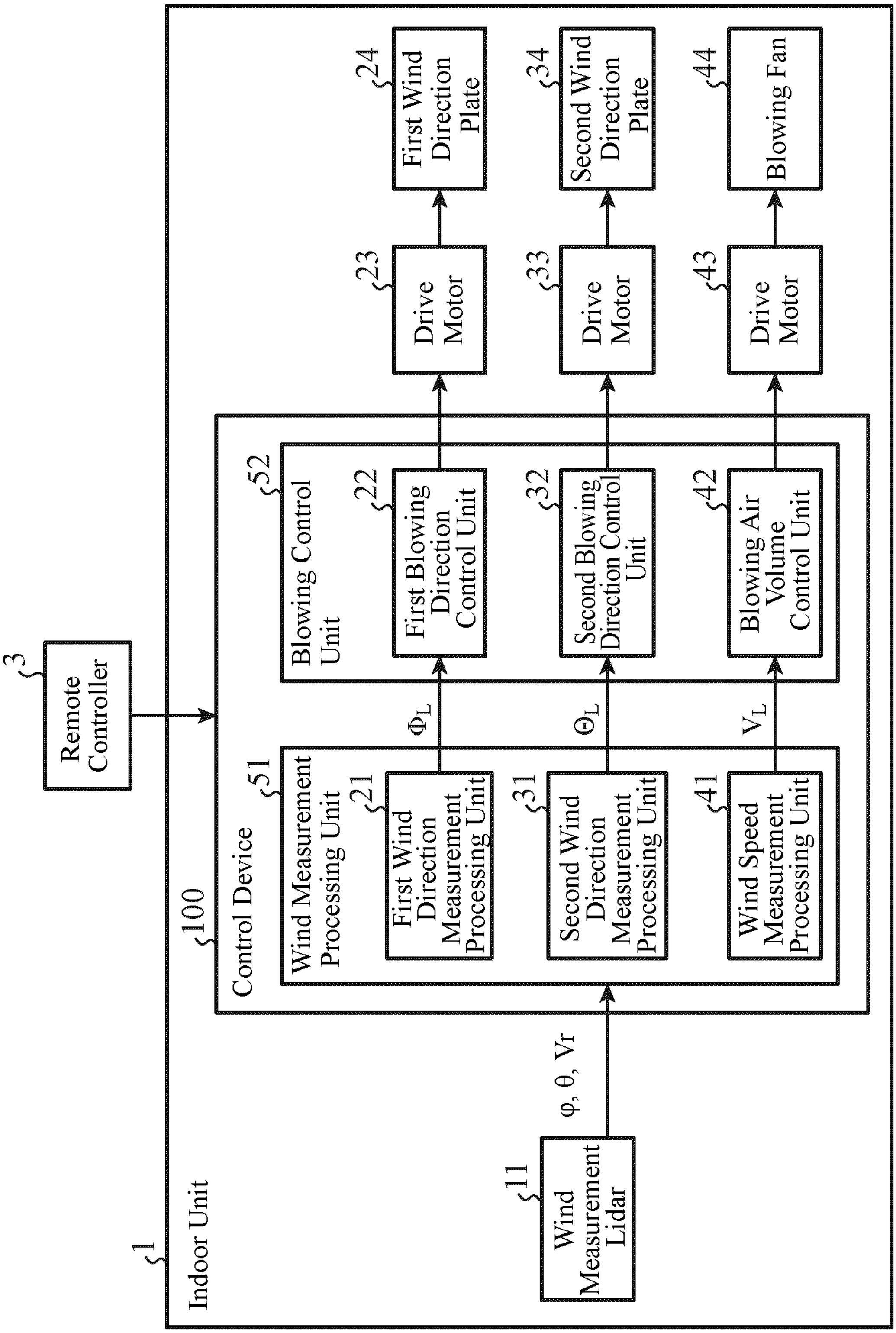
3
Remote Controller
1
Indoor Unit
100
Control Device
51
Wind Measurement Processing Unit
21
First Wind Direction Measurement Processing Unit
31
Second Wind Direction Measurement Processing Unit
41
Wind Speed Measurement Processing Unit
52
Blowing Control Unit
22
First Blowing Direction Control Unit
32
Second Blowing Direction Control Unit
42
Blowing Air Volume Control Unit
11
Wind Measurement Lidar
φ, θ, Vr
$\Phi_L$
$\Theta_L$
$V_L$
23
Drive Motor
33
Drive Motor
43
Drive Motor
24
First Wind Direction Plate
34
Second Wind Direction Plate
44
Blowing Fan

FIG. 3

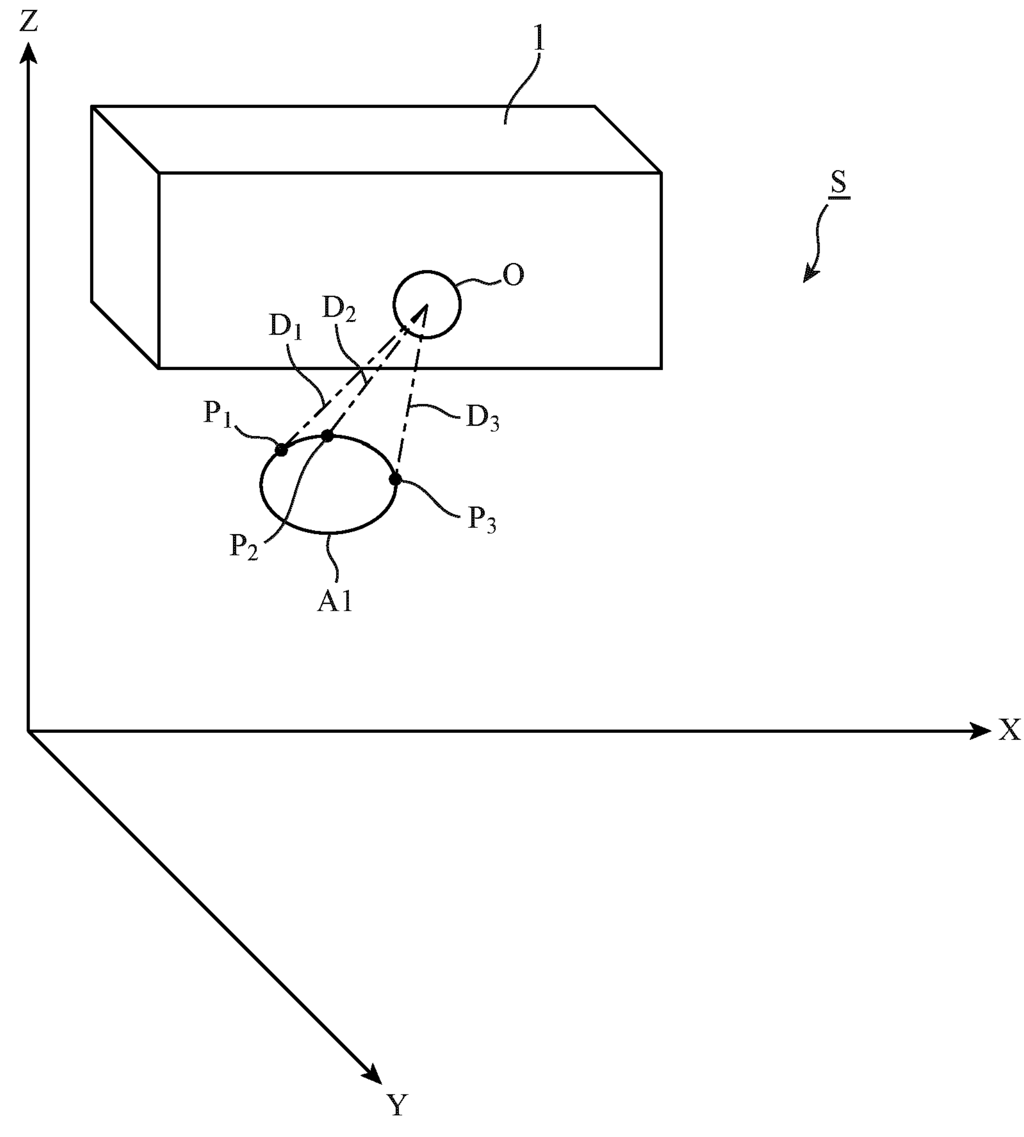

FIG. 4

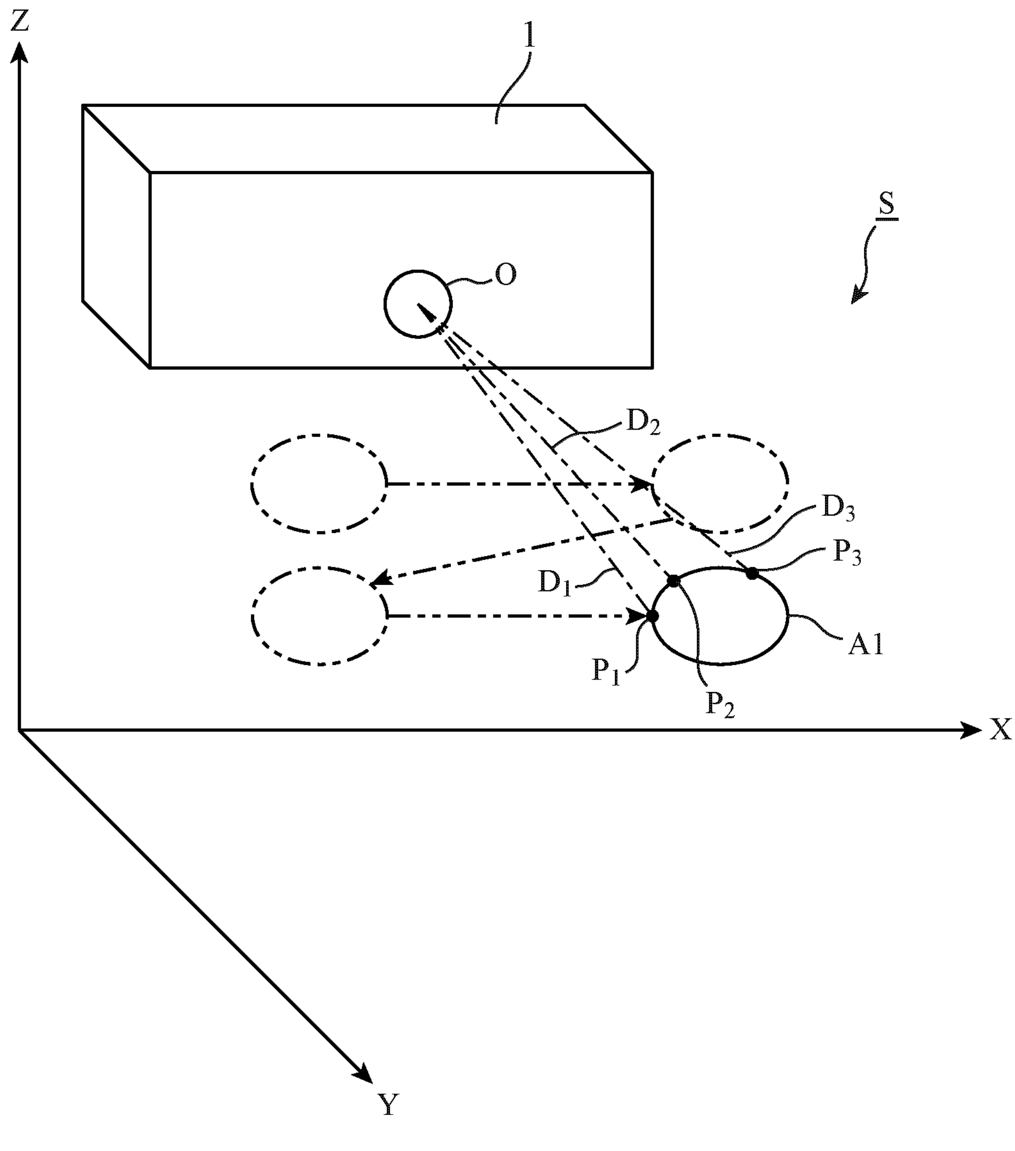

FIG. 5

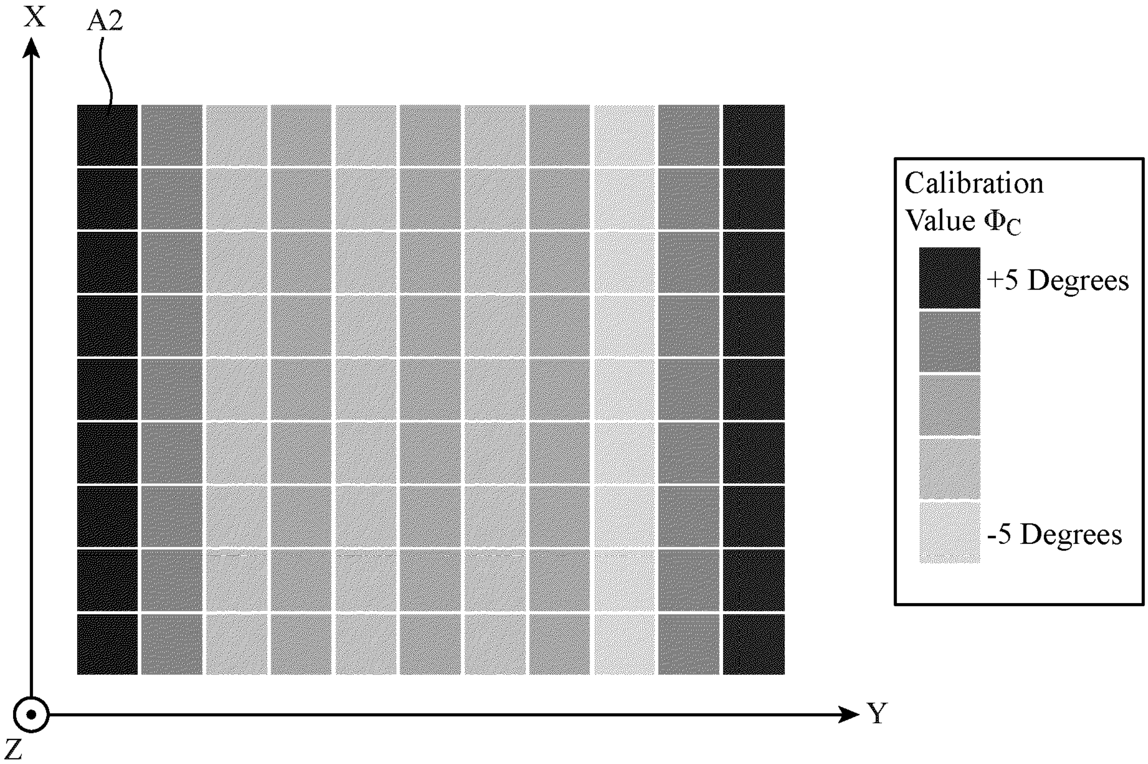


FIG. 6A

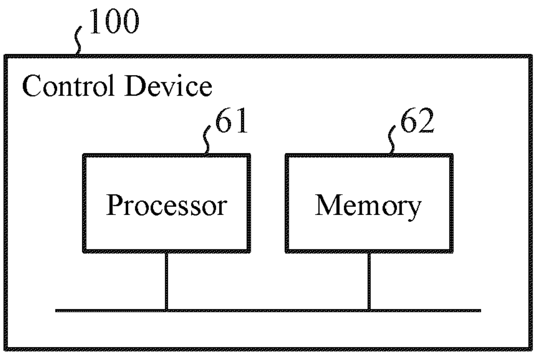


FIG. 6B

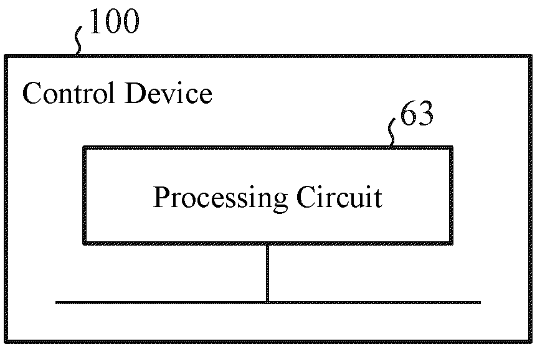

FIG. 7A

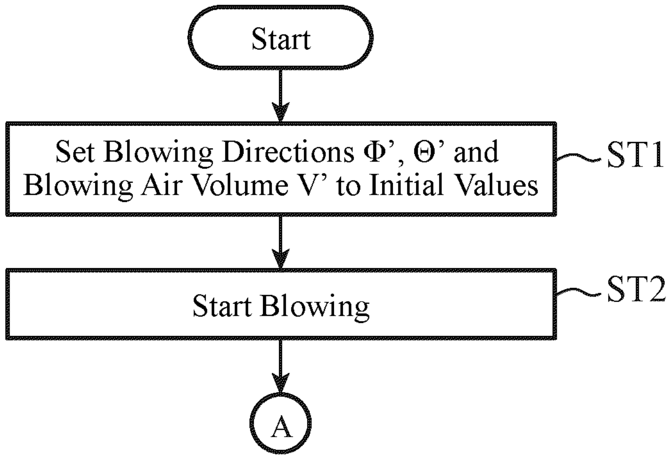
Start
Set Blowing Directions Φ', Θ' and Blowing Air Volume V' to Initial Values
ST1
Start Blowing
ST2
A

FIG. 7B

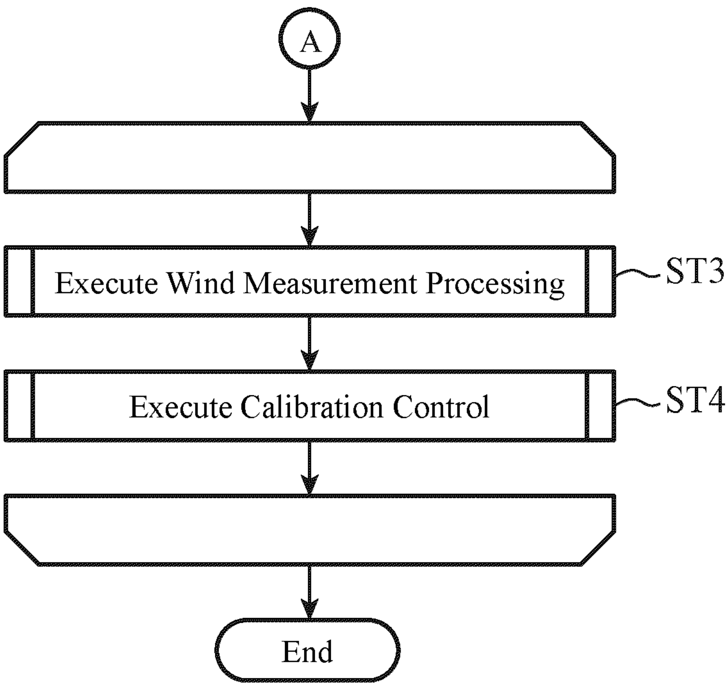
A
Execute Wind Measurement Processing
ST3
Execute Calibration Control
ST4
End

FIG. 8

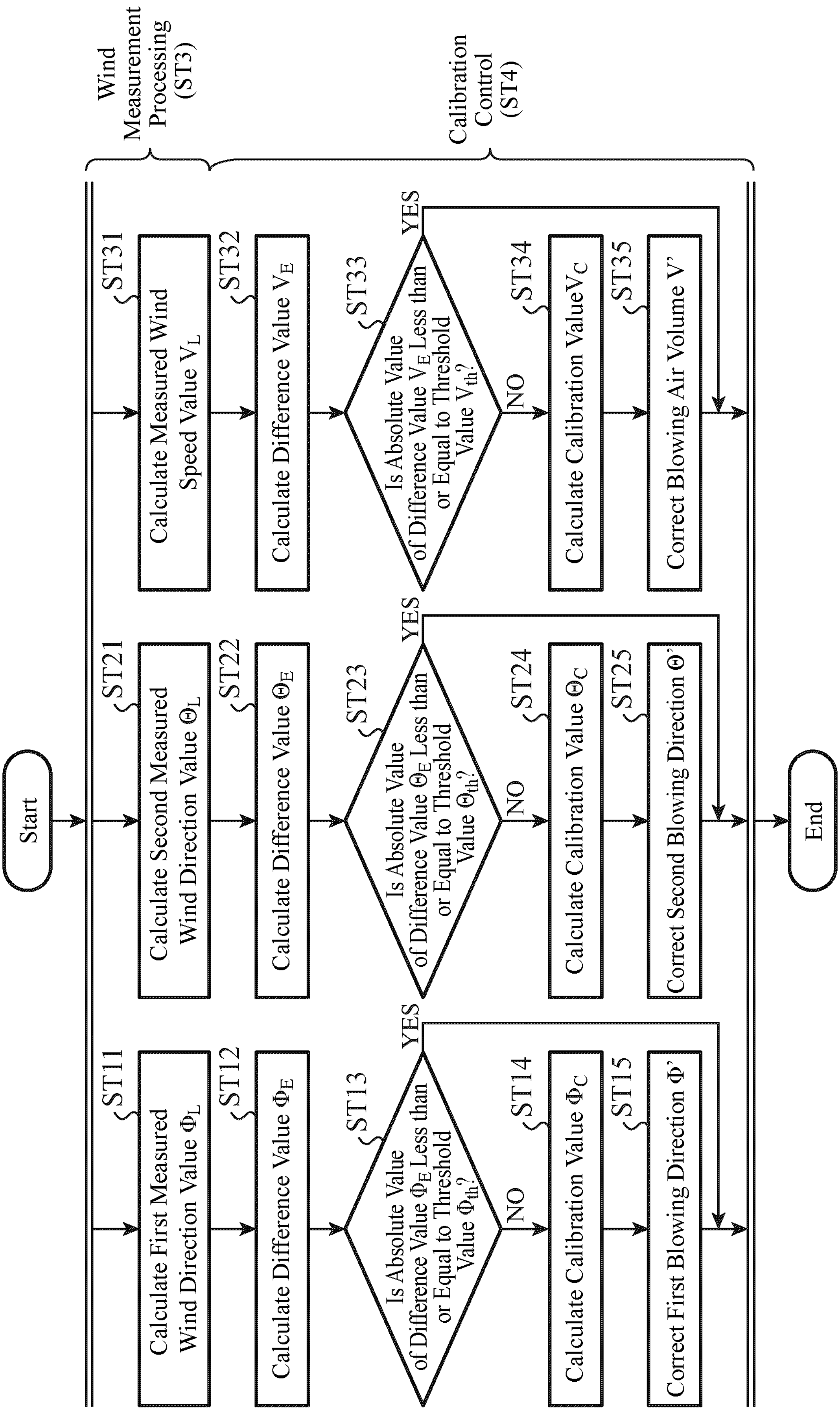
Wind Measurement Processing (ST3)
Calibration Control (ST4)
Start
ST11
Calculate First Measured Wind Direction Value $\Phi_L$
ST12
Calculate Difference Value $\Phi_E$
ST13
Is Absolute Value of Difference Value $\Phi_E$ Less than or Equal to Threshold Value $\Phi_{th}$?
YES
NO
ST14
Calculate Calibration Value $\Phi_C$
ST15
Correct First Blowing Direction Φ'
ST21
Calculate Second Measured Wind Direction Value $\Theta_L$
ST22
Calculate Difference Value $\Theta_E$
ST23
Is Absolute Value of Difference Value $\Theta_E$ Less than or Equal to Threshold Value $\Theta_{th}$?
YES
NO
ST24
Calculate Calibration Value $\Theta_C$
ST25
Correct Second Blowing Direction Θ'
ST31
Calculate Measured Wind Speed Value $V_L$
ST32
Calculate Difference Value $V_E$
ST33
Is Absolute Value of Difference Value $V_E$ Less than or Equal to Threshold Value $V_{th}$?
YES
NO
ST34
Calculate Calibration Value $V_C$
ST35
Correct Blowing Air Volume V'
End

FIG. 9

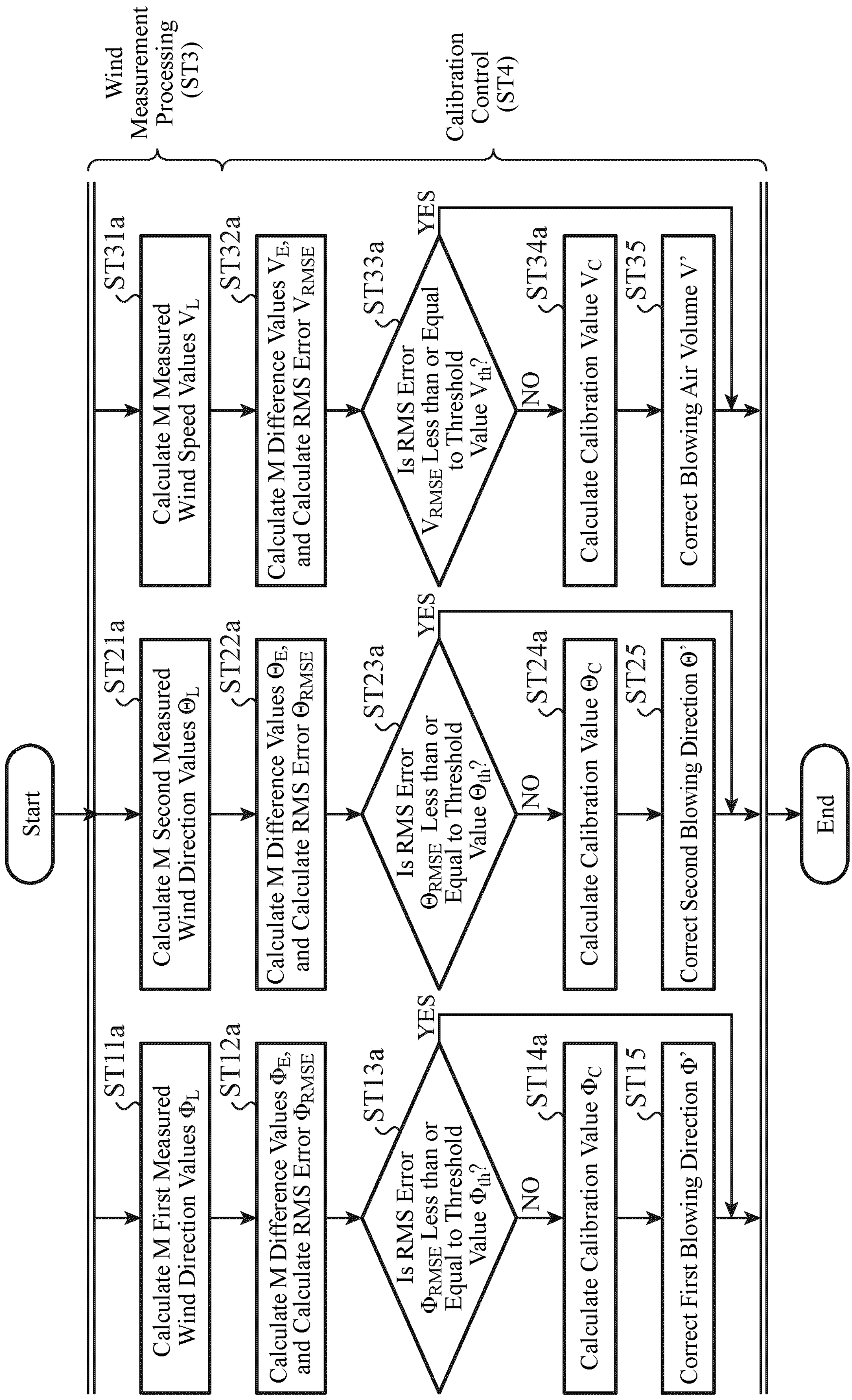
Start
Wind Measurement Processing (ST3)
Calibration Control (ST4)
ST11a
Calculate M First Measured Wind Direction Values $\Phi_L$
ST12a
Calculate M Difference Values $\Phi_E$, and Calculate RMS Error $\Phi_{RMSE}$
ST13a
Is RMS Error $\Phi_{RMSE}$ Less than or Equal to Threshold Value $\Phi_{th}$?
YES
NO
ST14a
Calculate Calibration Value $\Phi_C$
ST15
Correct First Blowing Direction Φ'
ST21a
Calculate M Second Measured Wind Direction Values $\Theta_L$
ST22a
Calculate M Difference Values $\Theta_E$, and Calculate RMS Error $\Theta_{RMSE}$
ST23a
Is RMS Error $\Theta_{RMSE}$ Less than or Equal to Threshold Value $\Theta_{th}$?
YES
NO
ST24a
Calculate Calibration Value $\Theta_C$
ST25
Correct Second Blowing Direction Θ'
ST31a
Calculate M Measured Wind Speed Values $V_L$
ST32a
Calculate M Difference Values $V_E$, and Calculate RMS Error $V_{RMSE}$
ST33a
Is RMS Error $V_{RMSE}$ Less than or Equal to Threshold Value $V_{th}$?
YES
NO
ST34a
Calculate Calibration Value $V_C$
ST35
Correct Blowing Air Volume V'
End

FIG. 10

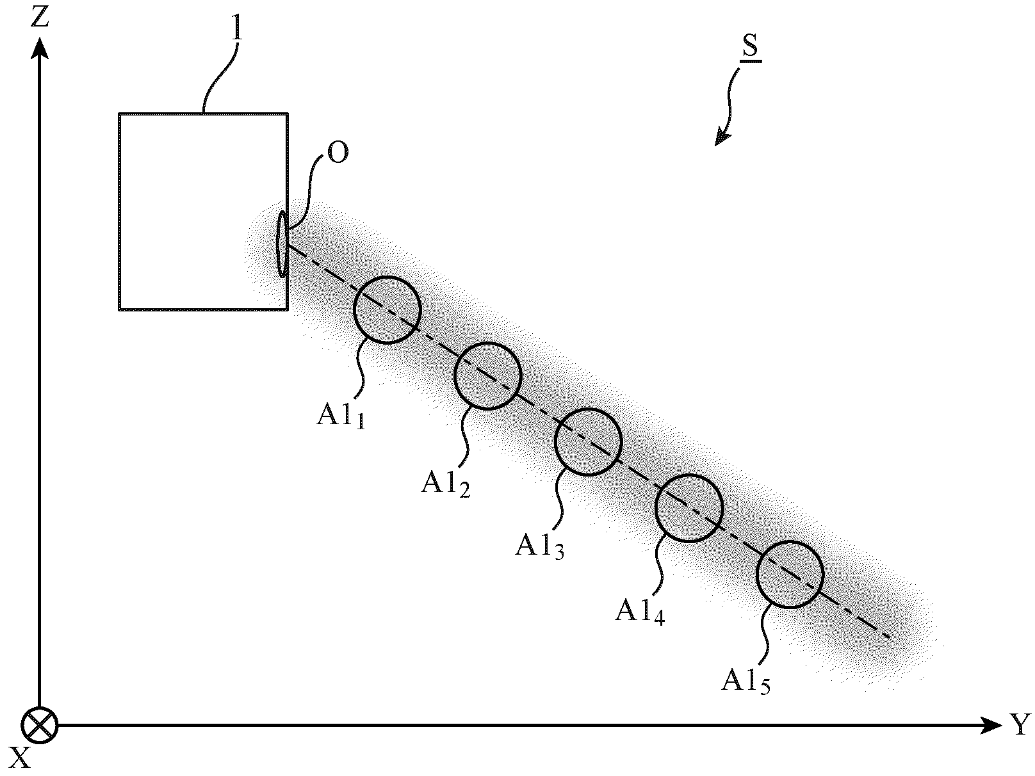
Z
1
S
O
A1$_1$
A1$_2$
A1$_3$
A1$_4$
A1$_5$
X
Y

FIG. 11

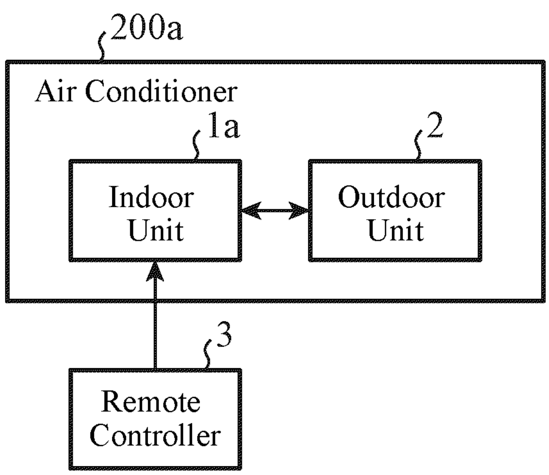
200a
Air Conditioner
1a
2
Indoor Unit
Outdoor Unit
3
Remote Controller

FIG. 12

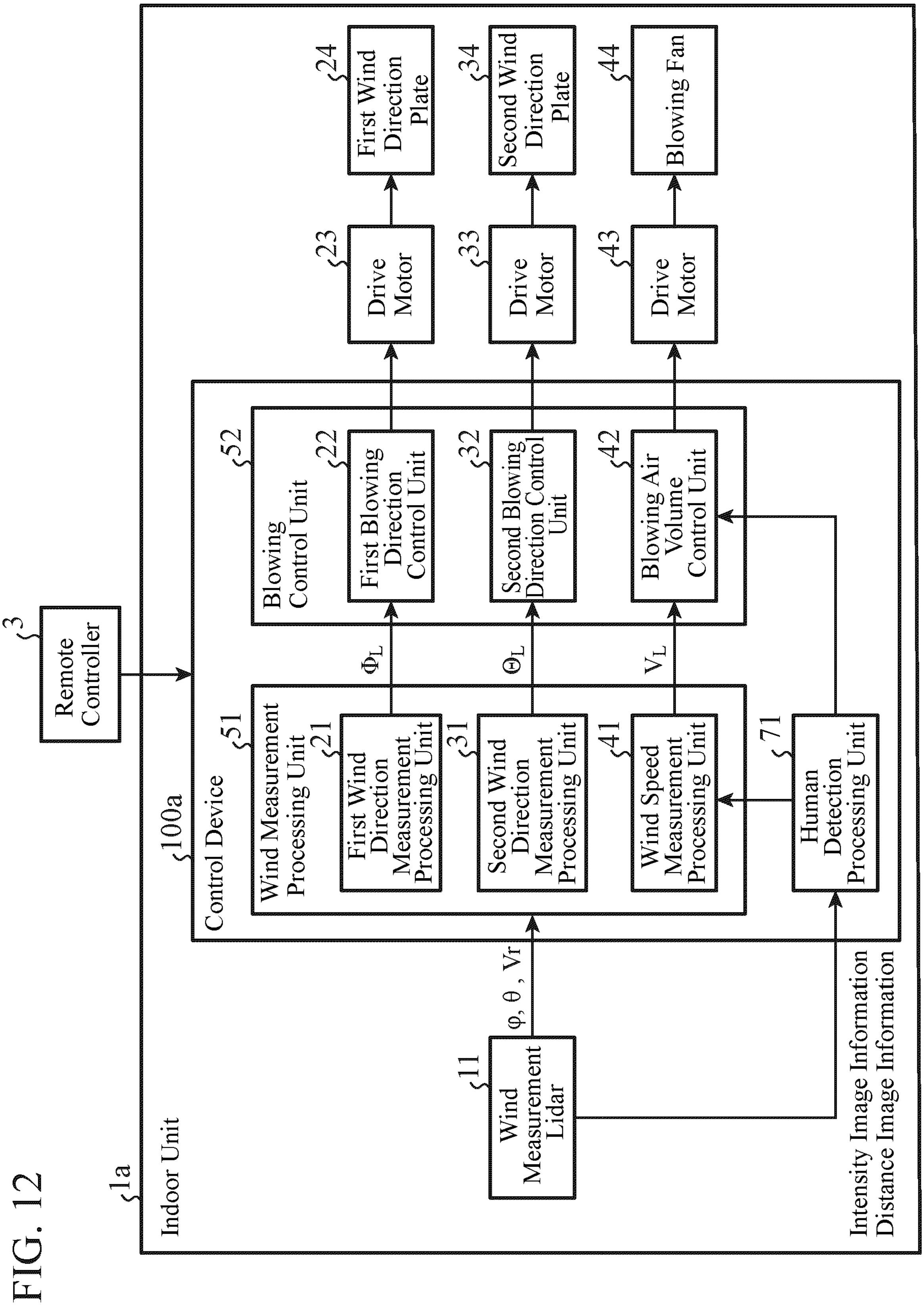
1a
Indoor Unit
3
Remote Controller
100a
Control Device
51
Wind Measurement Processing Unit
21
First Wind Direction Measurement Processing Unit
31
Second Wind Direction Measurement Processing Unit
41
Wind Speed Measurement Processing Unit
71
Human Detection Processing Unit
52
Blowing Control Unit
22
First Blowing Direction Control Unit
32
Second Blowing Direction Control Unit
42
Blowing Air Volume Control Unit
23
Drive Motor
33
Drive Motor
43
Drive Motor
24
First Wind Direction Plate
34
Second Wind Direction Plate
44
Blowing Fan
11
Wind Measurement Lidar
φ, θ , Vr
ΦL
ΘL
VL
Intensity Image Information
Distance Image Information

FIG. 13A

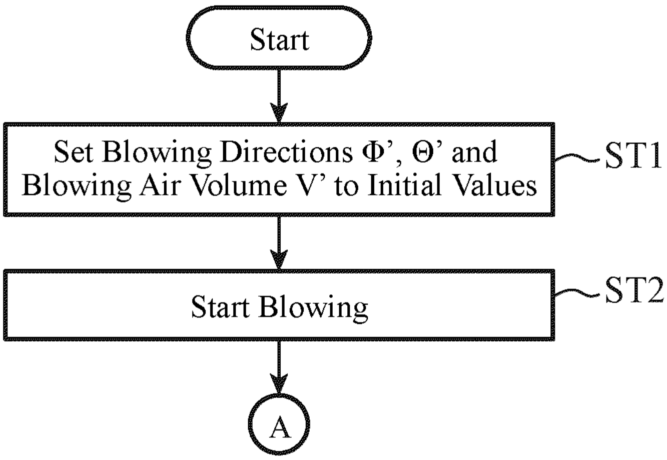
Start
Set Blowing Directions Φ', Θ' and Blowing Air Volume V' to Initial Values
ST1
Start Blowing
ST2
A

FIG. 13B

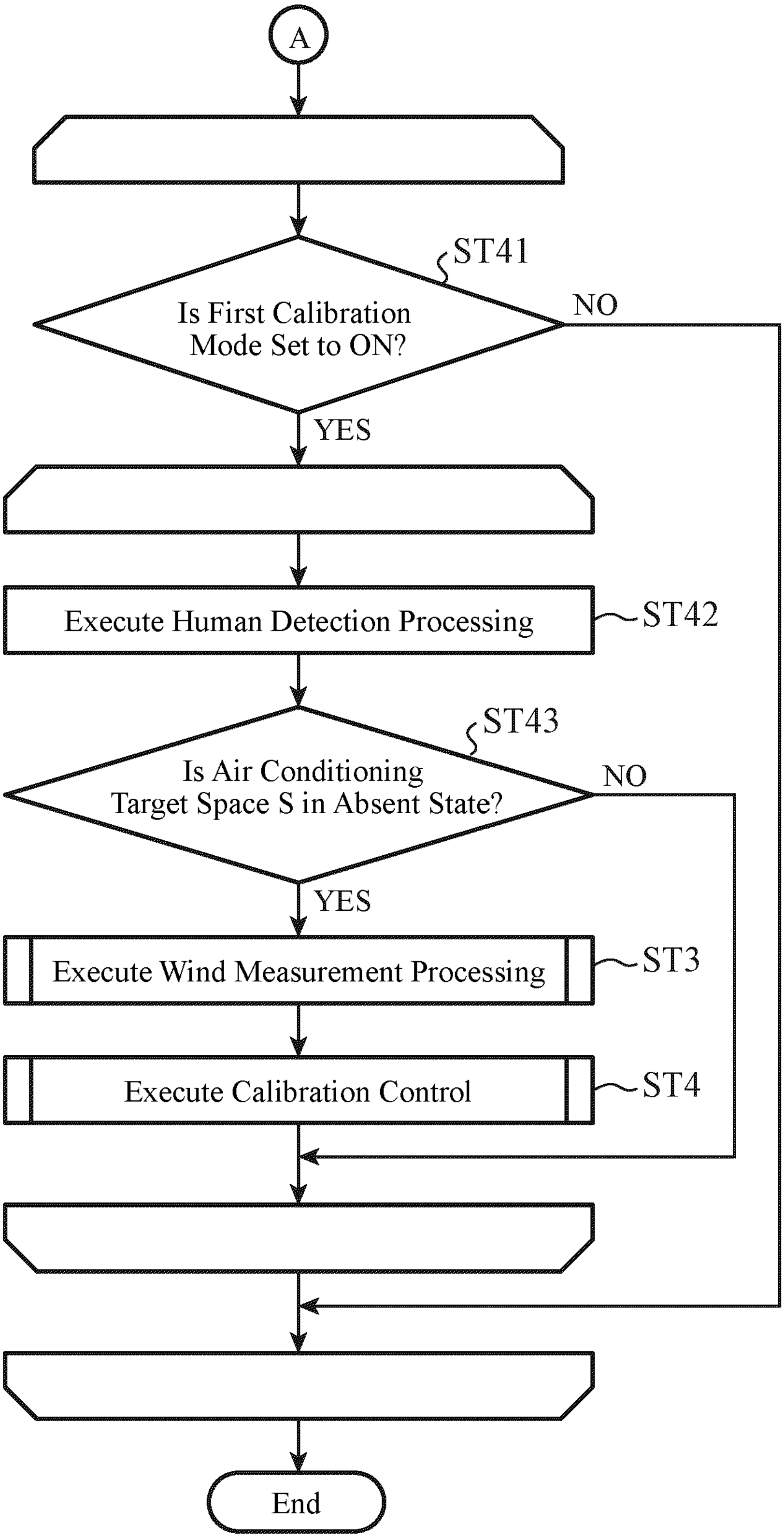
A
ST41
Is First Calibration Mode Set to ON?
NO
YES
Execute Human Detection Processing
ST42
ST43
Is Air Conditioning Target Space S in Absent State?
NO
YES
Execute Wind Measurement Processing
ST3
Execute Calibration Control
ST4
End

FIG. 13C

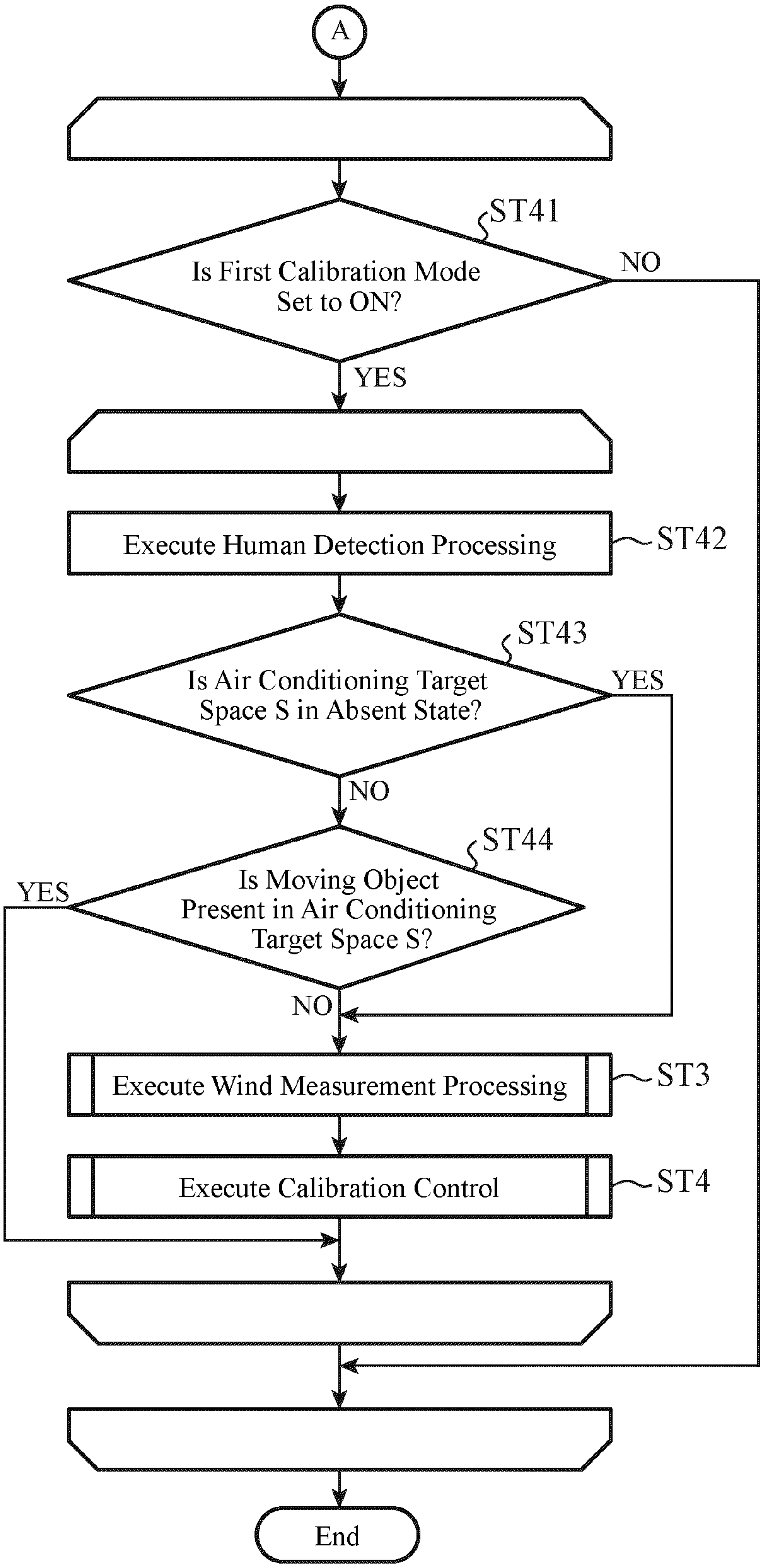
A
ST41
Is First Calibration Mode Set to ON?
NO
YES
Execute Human Detection Processing
ST42
ST43
Is Air Conditioning Target Space S in Absent State?
YES
NO
ST44
Is Moving Object Present in Air Conditioning Target Space S?
YES
NO
Execute Wind Measurement Processing
ST3
Execute Calibration Control
ST4
End

FIG. 14

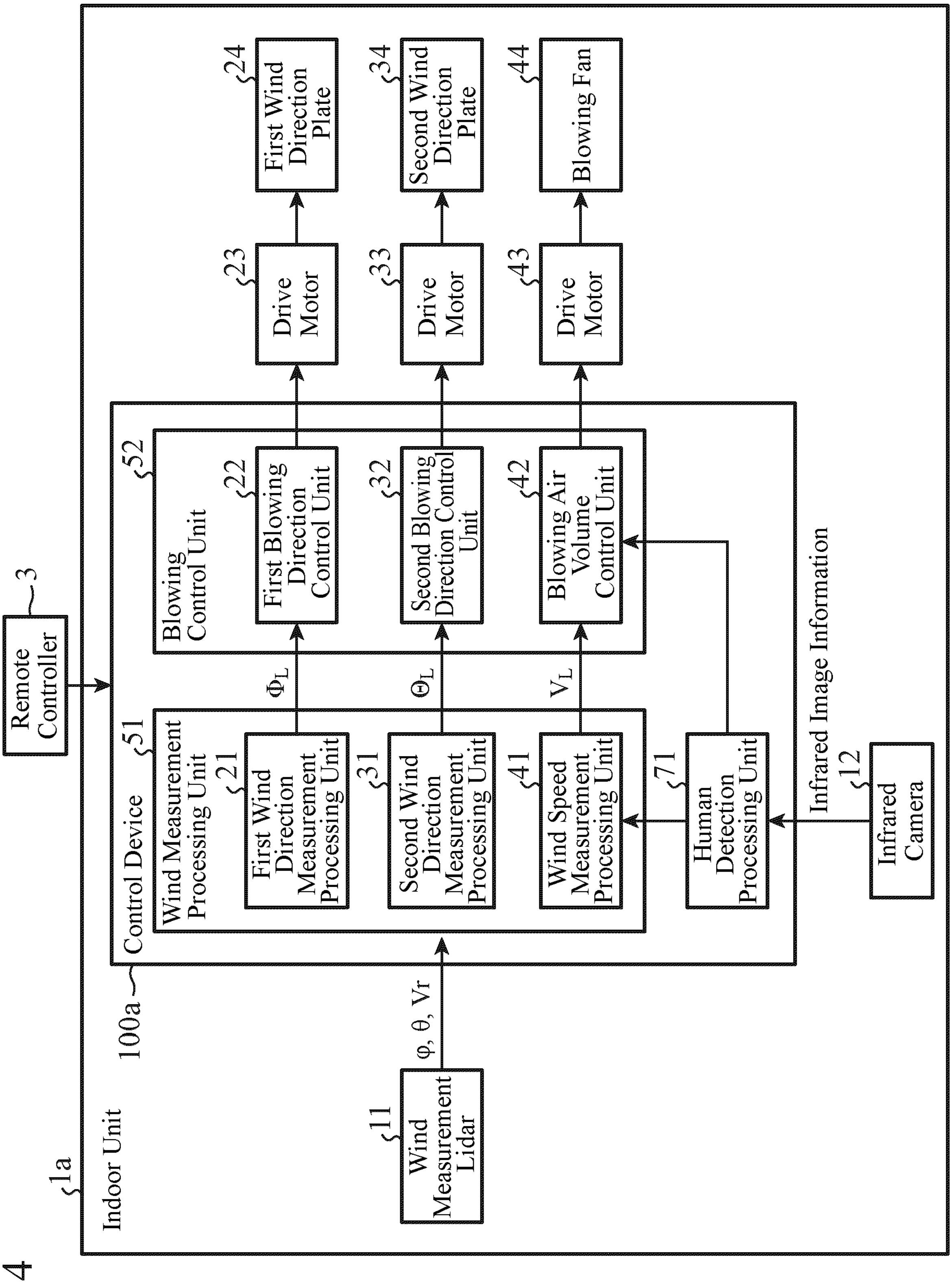
Remote Controller
3
Indoor Unit
1a
Control Device
100a
Wind Measurement Processing Unit
51
First Wind Direction Measurement Processing Unit
21
Second Wind Direction Measurement Processing Unit
31
Wind Speed Measurement Processing Unit
41
Human Detection Processing Unit
71
Blowing Control Unit
52
First Blowing Direction Control Unit
22
Second Blowing Direction Control Unit
32
Blowing Air Volume Control Unit
42
Drive Motor
23
Drive Motor
33
Drive Motor
43
First Wind Direction Plate
24
Second Wind Direction Plate
34
Blowing Fan
44
Wind Measurement Lidar
11
φ, θ, Vr
$\Phi_L$
$\Theta_L$
$V_L$
Infrared Image Information
Infrared Camera
12

FIG. 15

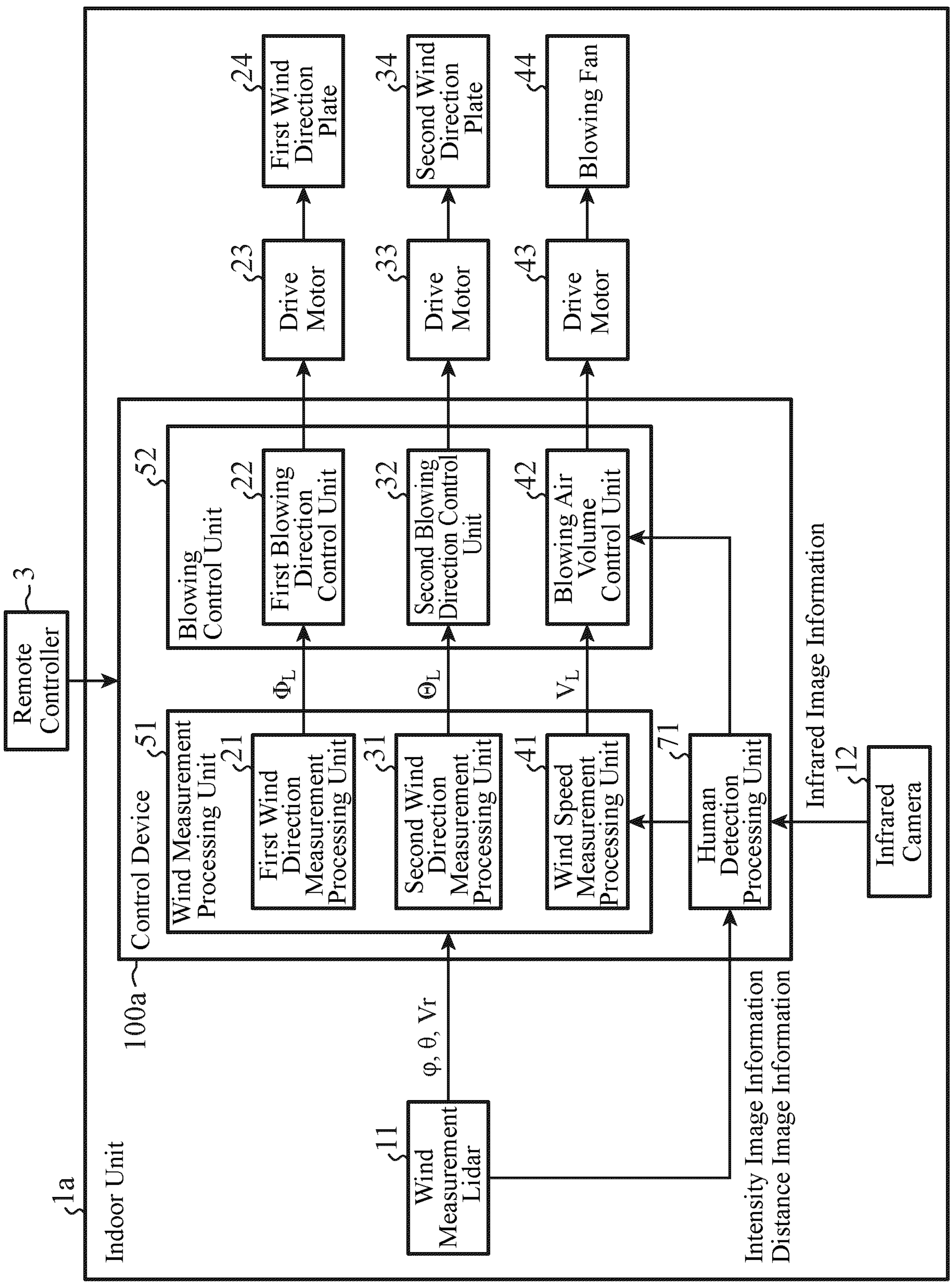

1a
Indoor Unit
3
Remote Controller
100a
Control Device
51
Wind Measurement Processing Unit
21
First Wind Direction Measurement Processing Unit
31
Second Wind Direction Measurement Processing Unit
41
Wind Speed Measurement Processing Unit
52
Blowing Control Unit
22
First Blowing Direction Control Unit
32
Second Blowing Direction Control Unit
42
Blowing Air Volume Control Unit
71
Human Detection Processing Unit
11
Wind Measurement Lidar
12
Infrared Camera
23
Drive Motor
33
Drive Motor
43
Drive Motor
24
First Wind Direction Plate
34
Second Wind Direction Plate
44
Blowing Fan
φ, θ, Vr
$\Phi_L$
$\Theta_L$
$V_L$
Intensity Image Information
Distance Image Information
Infrared Image Information

FIG. 16

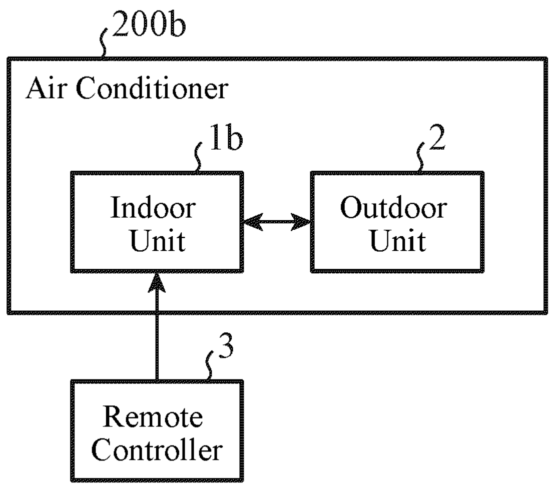
200b
Air Conditioner
1b
Indoor Unit
2
Outdoor Unit
3
Remote Controller

FIG. 17

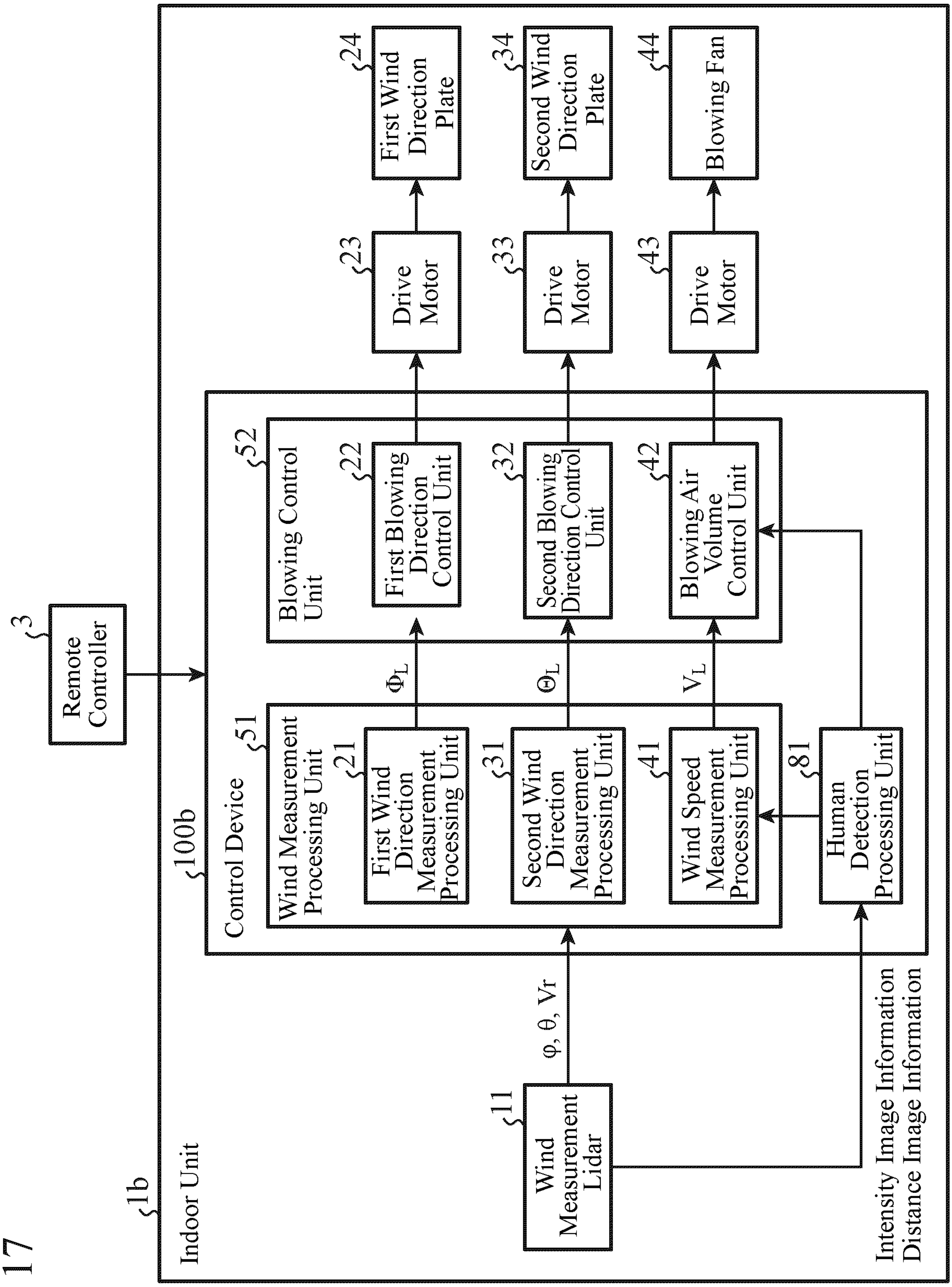
1b
Indoor Unit
11
Wind Measurement Lidar
φ, θ, Vr
Intensity Image Information
Distance Image Information
3
Remote Controller
100b
Control Device
51
Wind Measurement Processing Unit
21
First Wind Direction Measurement Processing Unit
31
Second Wind Direction Measurement Processing Unit
41
Wind Speed Measurement Processing Unit
81
Human Detection Processing Unit
$\Phi_L$
$\Theta_L$
$V_L$
52
Blowing Control Unit
22
First Blowing Direction Control Unit
32
Second Blowing Direction Control Unit
42
Blowing Air Volume Control Unit
23
Drive Motor
33
Drive Motor
43
Drive Motor
24
First Wind Direction Plate
34
Second Wind Direction Plate
44
Blowing Fan

FIG. 18A

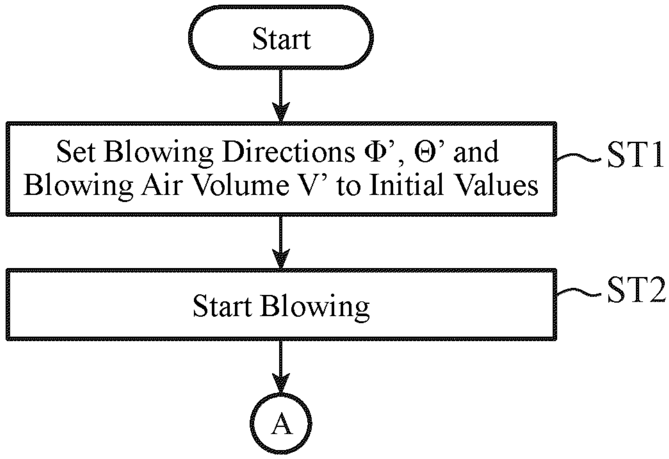
Start
Set Blowing Directions Φ', Θ' and Blowing Air Volume V' to Initial Values
ST1
Start Blowing
ST2
A

FIG. 18B

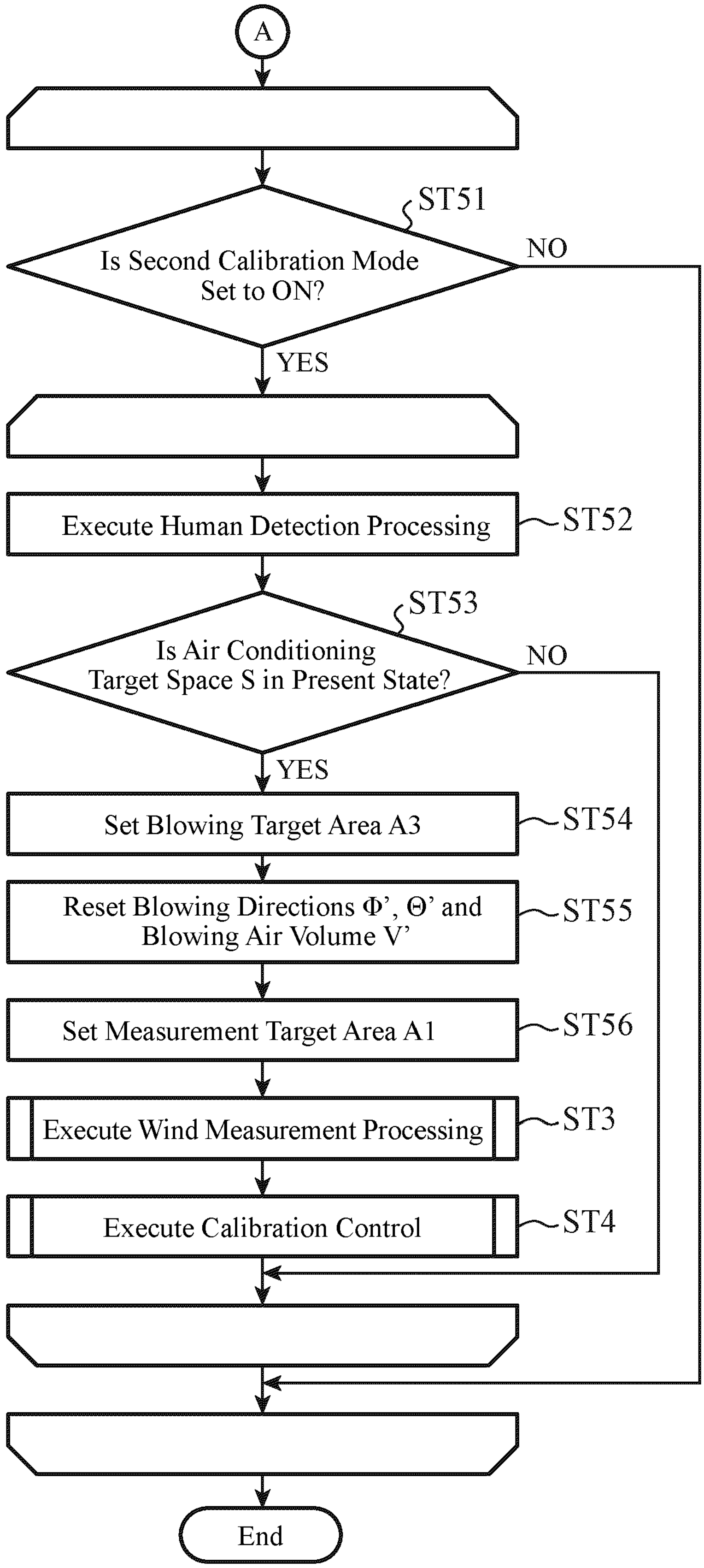
A
ST51
Is Second Calibration Mode Set to ON?
NO
YES
Execute Human Detection Processing
ST52
ST53
Is Air Conditioning Target Space S in Present State?
NO
YES
Set Blowing Target Area A3
ST54
Reset Blowing Directions Φ', Θ' and Blowing Air Volume V'
ST55
Set Measurement Target Area A1
ST56
Execute Wind Measurement Processing
ST3
Execute Calibration Control
ST4
End

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017180940 A
- US 5156203 A